# EUROPEAN PATENT APPLICATION

(11) **EP 4 391 657 A1**
(43) Date of publication of application: **26.06.2024**
(21) Application number: 22877862.7
(22) Date of filing: 22.09.2022
(51) Int. Cl.: H04W 52/02

(54) **COMMUNICATION METHOD, COMMUNICATION APPARATUS AND COMMUNICATION SYSTEM**

(30) Priority: 10.10.2021 CN 202111178674; 05.11.2021 CN 202111308873
(71) Applicant: Huawei Technologies Co., Ltd., Shenzhen, Guangdong 518129 (CN)
(72) Inventor: PAN, Qi, Shenzhen, Guangdong 518129 (CN); HUANG, Zhenglei, Shenzhen, Guangdong 518129 (CN); ZHANG, Wanqiang, Shenzhen, Guangdong 518129 (CN); LI, Yongcui, Shenzhen, Guangdong 518129 (CN)
(74) Representative: Gill Jennings & Every LLP
(86) International application number: PCT/CN2022/120600
(87) International publication number: WO 2023/056843

(57) **Abstract**

This application provides a communication method, a communication apparatus, and a communication system. The method includes: determining sleep time information of a terminal device based on satellite coverage information of the terminal device, where the satellite coverage information indicates a time period in which the terminal device is covered by a satellite network and/or a time period in which the terminal device is not covered by the satellite network, and a sleep time period corresponding to the sleep time information includes the time period in which the terminal device is not covered by the satellite network; and sending the sleep time information to the terminal device. According to the solution, the sleep time information is determined based on the satellite coverage information of the terminal device, and the sleep time period corresponding to the sleep time information includes the time period in which the terminal device is not covered by the satellite network, to ensure that the terminal device can sleep as much as possible in the time period in which the terminal device is not covered by the satellite network, and avoid unnecessary network connection operations such as cell selection, to reduce power consumption of the terminal device.

## Description

### CROSS-REFERENCE TO RELATED APPLICATION

This application claims priority to Chinese Patent Application No. 202111178674.7, filed with the China National Intellectual Property Administration on October 10, 2021 and entitled "COMMUNICATION METHOD, COMMUNICATION APPARATUS, AND COMMUNICATION SYSTEM", and claims priority to Chinese Patent Application No. 202111308873.5, filed with the China National Intellectual Property Administration on November 5, 2021 and entitled "COMMUNICATION METHOD, COMMUNICATION APPARATUS, AND COMMUNICATION SYSTEM", which are incorporated herein by reference in their entireties.

### TECHNICAL FIELD

This application relates to the field of communication technologies, and in particular, to a communication method, a communication apparatus, and a communication system.

### BACKGROUND

Currently, in some communication scenarios, for example, a massive machine type communications (massive machine type communications, mMTC) application scenario, to ensure a network coverage effect of a terminal device, satellite communication is introduced. The satellite communication can enhance network coverage to some extent.

However, because a satellite is in a moving state, it is possible that the terminal device cannot be covered by a satellite network in a time period.

### SUMMARY

Embodiments of this application provide a communication method, a communication apparatus, and a communication system, to reduce power consumption of a terminal device or a core network device (for example, a mobility management network element) in a satellite-based communication scenario.

According to a first aspect, an embodiment of this application provides a communication method. The method may be performed by a mobility management network element or a module (for example, a chip) used in a mobility management network element. The method includes: determining sleep time information of a terminal device based on satellite coverage information of the terminal device, where the satellite coverage information indicates a time period in which the terminal device is covered by a satellite network and/or indicates a time period in which the terminal device is not covered by the satellite network, and a sleep time period corresponding to the sleep time information includes the time period in which the terminal device is not covered by the satellite network; and sending the sleep time information to the terminal device.

According to the foregoing solution, the mobility management network element determines the sleep time information based on the satellite coverage information of the terminal device, and the sleep time period corresponding to the sleep time information includes the time period in which the terminal device is not covered by the satellite network, to ensure that the terminal device can sleep as much as possible in the time period in which the terminal device is not covered by the satellite network, and avoid unnecessary network connection operations such as cell selection, to reduce power consumption of the terminal device.

In a possible implementation method, one or more of an eDRX cycle, a periodic TAU cycle, or a periodic registration cycle of the terminal device is determined based on the satellite coverage information, where the sleep time information includes a sleep start time, and the sleep start time is within the eDRX cycle or the periodic TAU cycle.

In a possible implementation method, the sleep time information includes a sleep start time and a sleep end time; or the sleep time information includes a sleep start time and sleep duration.

According to the foregoing solution, in the sleep time period corresponding to the sleep time information, the terminal device keeps sleeping and does not execute a service, including skipping performing periodic TAU, periodic registration, and uplink data transmission, so that power consumption of the terminal device can be reduced.

In a possible implementation method, the satellite coverage information is received; or ephemeris information of a satellite cell in which the terminal device is located is received, and the satellite coverage information is determined based on the ephemeris information.

In a possible implementation method, it is determined that a location of the terminal device is fixed or a moving track of the terminal device is fixed.

In a possible implementation method, when a deregistration timer corresponding to the terminal device expires, it is determined, based on the satellite coverage information, that the terminal device is not covered by the satellite network, and it is determined to skip performing deregistration on the terminal device.

According to this solution, when the terminal device is not covered by the satellite network, the mobility management network element does not deregister the terminal device, so that switching of a status of the terminal device back and forth between registration and deregistration may be reduced, thereby reducing power consumption of the terminal device and reducing frequent signaling interaction with a network.

According to a second aspect, an embodiment of this application provides a communication method. The method may be performed by a mobility management network element or a module (for example, a chip) used in a mobility management network element. The method includes: when a deregistration timer corresponding to a terminal device expires, determining, based on satellite coverage information of the terminal device, that the terminal device is not covered by a satellite network, where the satellite coverage information indicates a time period in which the terminal device is covered by the satellite network and/or a time period in which the terminal device is not covered by the satellite network; and in response to a case in which the terminal device is not covered by the satellite network, determining to skip performing deregistration on the terminal device.

According to this solution, when the terminal device is not covered by the satellite network, the mobility management network element does not deregister the terminal device, so that switching of a status of the terminal device back and forth between registration and deregistration may be reduced, thereby reducing power consumption of the terminal device. In a possible implementation method, first information is sent to the terminal device, where the first information indicates that the terminal device performs uplink transmission based on a satellite network coverage status when the terminal device has an uplink transmission requirement.

In a possible implementation method, the first information is the satellite coverage information, and the first information specifically indicates that the terminal device initiates uplink transmission based on the satellite coverage information when the terminal device has the uplink transmission requirement.

In a possible implementation method, the satellite coverage information is sent to the terminal device, where the first information specifically indicates that the terminal device initiates uplink transmission based on the satellite coverage information when the terminal device has the uplink transmission requirement.

In a possible implementation method, the uplink transmission requirement includes one or more of periodic TAU, periodic registration, or uplink data transmission.

In a possible implementation method, the satellite coverage information is received; or ephemeris information of a satellite cell in which the terminal device is located is received, and the satellite coverage information is determined based on the ephemeris information.

In a possible implementation method, it is determined that a location of the terminal device is fixed or a moving track of the terminal device is fixed.

According to a third aspect, an embodiment of this application provides a communication method. The method may be performed by a mobility management network element or a module (for example, a chip) used in a mobility management network element. The method includes: determining satellite coverage information of a terminal device, where the satellite coverage information indicates a time period in which the terminal device is covered by a satellite network and/or indicates a time period in which the terminal device is not covered by the satellite network; and determining a maximum waiting time based on the satellite coverage information, where the maximum waiting time indicates maximum duration for waiting until the terminal device is reachable.

According to the foregoing solution, the mobility management network element may determine reachability based on the satellite coverage information of the terminal device. If the terminal device is unreachable, the mobility management network element determines the maximum waiting time based on the satellite coverage information, to ensure that the terminal device is not paged when the terminal device is not covered by the satellite network. This can reduce unnecessary signaling interaction between the mobility management network element and an access network device, and avoid a waste of paging resources of the access network device and a loss of downlink data of the terminal device.

In a possible implementation method, it is determined, based on the satellite coverage information, that the terminal device is unreachable.

In a possible implementation method, the satellite coverage information is received.

In a possible implementation method, ephemeris information of a satellite cell in which the terminal device is located is received, and the satellite coverage information is determined based on the ephemeris information.

In a possible implementation method, a paging message is sent to the access network device, where the paging message includes identification information of the terminal device, and the paging message indicates to page the terminal device; and a first message is received from the access network device, where the first message includes a paging failure indication and the satellite coverage information, and the paging failure indication indicates that a reason for a paging failure is that the terminal device is not covered by the satellite network. Optionally, the paging failure indication further indicates that the mobility management network element needs to perform reachability determining/paging based on the satellite coverage information.

In a possible implementation method, a paging message is sent to the access network device, where the paging message includes identification information of the terminal device, and the paging message indicates to page the terminal device; and a first message is received from the access network device, where the first message includes the satellite coverage information of the terminal device, and the satellite coverage information indicates that a reason for a paging failure is that the terminal device is not covered by the satellite network. Optionally, the satellite coverage information further indicates that the mobility management network element needs to perform reachability determining/paging based on the satellite coverage information.

In a possible implementation method, it is determined that a location of the terminal device is fixed or a moving track of the terminal device is fixed.

According to a fourth aspect, an embodiment of this application provides a communication method. The method may be performed by a terminal device or a module (for example, a chip) used in a terminal device. The method includes: receiving first information, where the first information indicates that the terminal device performs uplink transmission based on a satellite network coverage status when the terminal device has an uplink transmission requirement; and when there is the uplink transmission requirement, determining, based on the first information, that the terminal device is not covered by a satellite network, and determining to skip performing uplink transmission.

According to the foregoing solution, when the terminal device is not covered by the satellite network, even if there is an uplink transmission requirement, the terminal device skips performing uplink transmission, so that unnecessary network connection operations such as cell scanning and cell selection can be avoided, thereby reducing power consumption of the terminal device.

In a possible implementation method, the first information is satellite coverage information. The satellite coverage information indicates a time period in which the terminal device is covered by a satellite network and/or indicates a time period in which the terminal device is not covered by the satellite network. The first information specifically indicates that the terminal device initiates uplink transmission based on the satellite coverage information when the terminal device has the uplink transmission requirement.

In a possible implementation method, satellite coverage information is received. The satellite coverage information indicates a time period in which the terminal device is covered by the satellite network and/or a time period in which the terminal device is not covered by the satellite network. The first information specifically indicates that the terminal device initiates uplink transmission based on the satellite coverage information when the terminal device has the uplink transmission requirement.

In a possible implementation method, the uplink transmission requirement includes one or more of periodic TAU, periodic registration, or uplink data transmission.

According to a fifth aspect, an embodiment of this application provides a communication method. The method may be performed by a terminal device or a module (for example, a chip) used in a terminal device. The method includes: receiving sleep time information, where a sleep time period corresponding to the sleep time information includes a time period in which the terminal device is not covered by a satellite network, the sleep time information is determined based on satellite coverage information of the terminal device, and the satellite coverage information indicates a time period in which the terminal device is covered by the satellite network and/or the time period in which the terminal device is not covered by the satellite network; and sleeping based on the sleep time information.

According to the foregoing solution, the terminal device can sleep as much as possible in the time period in which the terminal device is not covered by the satellite network, to avoid unnecessary network connection operations such as cell scanning and cell selection, to reduce power consumption of the terminal device.

In a possible implementation method, the sleep time information includes a sleep start time, and the sleep start time is within an eDRX cycle of the terminal device, a periodic TAU cycle of the terminal device, or a periodic registration cycle of the terminal device.

In a possible implementation method, the sleep time information includes a sleep start time and a sleep end time; or the sleep time information includes a sleep start time and sleep duration.

According to a sixth aspect, an embodiment of this application provides a communication method. The method may be performed by an access network device or a module (for example, a chip) used in an access network device. The method includes: obtaining satellite coverage information or ephemeris information of a satellite cell, where the satellite coverage information indicates a time period in which the satellite cell is covered by a satellite network and/or a time period in which the satellite cell is not covered by the satellite network; and sending the satellite coverage information or the ephemeris information of the satellite cell to a mobility management network element.

In a possible implementation method, in an N2 interface setup procedure, satellite coverage information or ephemeris information corresponding to a satellite cell of the access network device is sent to the mobility management network element.

In a possible implementation method, in a registration procedure of a terminal device, satellite coverage information or ephemeris information of a satellite cell in which the terminal device is located is sent to the mobility management network element.

In a possible implementation method, a paging message is received from the mobility management network element, where the paging message includes identification information of the terminal device, and the paging message indicates to page the terminal device. It is determined, based on the satellite coverage information of the satellite cell in which the terminal device is located, that the satellite cell has no network coverage. A first message is sent to the mobility management network element, where the first message includes a paging failure indication and the satellite coverage information of the satellite cell in which the terminal device is located, and the paging failure indication indicates that a reason for a paging failure is that the satellite cell is not covered by the satellite network. Optionally, the paging failure indication further indicates that the mobility management network element needs to perform reachability determining/paging based on the satellite coverage information.

In a possible implementation method, a paging message is received from the mobility management network element, where the paging message includes identification information of the terminal device, and the paging message indicates to page the terminal device. It is determined, based on the satellite coverage information of the satellite cell in which the terminal device is located, that the satellite cell has no network coverage. A first message is sent to the mobility management network element, where the first message includes the satellite coverage information of the satellite cell in which the terminal device is located, the satellite coverage information of the satellite cell in which the terminal device is located is the satellite coverage information of the terminal device, and the satellite coverage information indicates that the reason for the paging failure is that the satellite cell is not covered by the satellite network. Optionally, the satellite coverage information further indicates that the mobility management network element needs to perform reachability determining/paging based on the satellite coverage information.

According to a seventh aspect, an embodiment of this application provides a communication method. The method may be performed by a mobility management network element or a module (for example, a chip) used in a mobility management network element. The method includes: determining a periodic TAU cycle of a terminal device based on satellite coverage information of the terminal device, and sending the periodic TAU cycle to the terminal device; or determining a periodic registration cycle of a terminal device based on satellite coverage information of the terminal device, and sending the periodic registration cycle to the terminal device, where the satellite coverage information indicates a time period in which the terminal device is covered by a satellite network and/or indicates a time period in which the terminal device is not covered by the satellite network.

According to the foregoing solution, the mobility management network element determines the periodic TAU cycle or the periodic registration cycle based on the satellite coverage information of the terminal device, so that a time period corresponding to the periodic TAU cycle or a time period corresponding to the periodic registration cycle includes the time period in which the terminal device is not covered by the satellite network, to ensure that the terminal device can avoid executing, as much as possible, a periodic TAU procedure or a periodic registration procedure in the time period in which the terminal device is not covered by the satellite network, thereby avoiding unnecessary network connection operations such as cell selection, and reducing power consumption of the terminal device.

In a possible implementation method, the time period corresponding to the periodic TAU cycle includes the time period in which the terminal device is not covered by the satellite network; or the time period corresponding to the periodic registration cycle includes the time period in which the terminal device is not covered by the satellite network.

In a possible implementation method, indication information is sent to an access network device based on the satellite coverage information, where the indication information indicates the access network device to execute a procedure of releasing the terminal device.

In a possible implementation method, first duration is determined based on the satellite coverage information of the terminal device, where the first duration is duration after the terminal device enters an idle state and before the terminal device enters a sleep state; and the first duration is sent to the terminal device.

In a possible implementation method, a cause value is sent to the terminal device, where the cause value is discontinuous satellite coverage.

In a possible implementation method, the cause value further indicates that the terminal device skips performing uplink transmission during sleep.

In a possible implementation method, a GUTI reallocation command is sent to the terminal device, where the GUTI reallocation command includes the periodic TAU cycle; or a TAU accept message is sent to the terminal device, where the TAU accept message includes the periodic TAU cycle.

In a possible implementation method, a configuration update command is sent to the terminal device, where the configuration update command includes the periodic registration cycle; or a mobility registration update accept message is sent to the terminal device, where the mobility registration update accept message includes the periodic registration cycle.

According to an eighth aspect, an embodiment of this application provides a communication method. The method may be performed by a terminal device or a module (for example, a chip) used in a terminal device. The method includes: receiving a periodic TAU cycle from a mobility management network element, and performing periodic TAU based on the periodic TAU cycle, where a time period corresponding to the periodic TAU cycle includes a time period in which the terminal device is not covered by a satellite network; or receiving a periodic registration cycle from a mobility management network element, and performing periodic registration based on the periodic registration cycle, where a time period corresponding to the periodic registration cycle includes a time period in which the terminal device is not covered by a satellite network.

According to the foregoing solution, the time period corresponding to the periodic TAU cycle received by the terminal device or the time period corresponding to the periodic registration cycle received by the terminal device includes the time period in which the terminal device is not covered by the satellite network, to ensure that the terminal device can avoid executing, as much as possible, a periodic TAU procedure or a periodic registration procedure in the time period in which the terminal device is not covered by the satellite network, thereby avoiding unnecessary network connection operations such as cell selection, and reducing power consumption of the terminal device.

In a possible implementation method, the periodic TAU cycle or the periodic registration cycle is determined based on satellite coverage information of the terminal device, and the satellite coverage information indicates a time period in which the terminal device is covered by the satellite network and/or the time period in which the terminal device is not covered by the satellite network.

In a possible implementation method, before the periodic TAU cycle is received from the mobility management network element, a TAU request is sent to the mobility management network element based on the satellite coverage information of the terminal device; or before the periodic registration cycle is received from the mobility management network element, a mobility registration update request is sent to the mobility management network element based on the satellite coverage information of the terminal device, where the satellite coverage information indicates the time period in which the terminal device is covered by the satellite network and/or the time period in which the terminal device is not covered by the satellite network.

In a possible implementation method, first duration is received from the mobility management network element, where the first duration is duration after the terminal device enters an idle state and before the terminal device enters a sleep state, and the first duration is determined based on the satellite coverage information of the terminal device.

In a possible implementation method, a cause value is received from the mobility management network element, where the cause value is discontinuous satellite coverage.

In a possible implementation method, the cause value indicates that the terminal device skips performing uplink transmission during sleep. When there is an uplink transmission requirement, it is determined, based on the cause value, to skip performing uplink transmission.

According to a ninth aspect, an embodiment of this application provides a communication method. The method may be performed by an access network device or a module (for example, a chip) used in an access network device. The method includes: sending a context release request to a mobility management network element based on satellite coverage information of a terminal device, where the context release request is used to request the mobility management network element to release a context of the terminal device, and the satellite coverage information indicates a time period in which the terminal device is covered by a satellite network and/or indicates a time period in which the terminal device is not covered by the satellite network; and receiving a periodic TAU cycle from the mobility management network element, and sending the periodic TAU cycle to the terminal device, where a time period corresponding to the periodic TAU cycle includes the time period in which the terminal device is not covered by the satellite network; or receiving a periodic registration cycle from the mobility management network element, and sending the periodic registration cycle to the terminal device, where a time period corresponding to the periodic registration cycle includes the time period in which the terminal device is not covered by the satellite network.

According to a tenth aspect, an embodiment of this application provides a communication apparatus. The apparatus may be a mobility management network element or a module (for example, a chip) used in a mobility management network element. The apparatus has a function of implementing any implementation method of the first aspect to the third aspect and the seventh aspect. The function may be implemented by hardware, or may be implemented by hardware executing corresponding software. The hardware or the software includes one or more modules corresponding to the function.

According to an eleventh aspect, an embodiment of this application provides a communication apparatus. The apparatus may be a terminal device or a module (for example, a chip) used in a terminal device. The apparatus has a function of implementing any implementation method of the fourth aspect, the fifth aspect, or the eighth aspect. The function may be implemented by hardware, or may be implemented by hardware executing corresponding software. The hardware or the software includes one or more modules corresponding to the function.

According to a twelfth aspect, an embodiment of this application provides a communication apparatus. The apparatus may be an access network device or a module (for example, a chip) used in an access network device. The apparatus has a function of implementing any implementation method of the sixth aspect or the ninth aspect. The function may be implemented by hardware, or may be implemented by hardware executing corresponding software. The hardware or the software includes one or more modules corresponding to the function.

According to a thirteenth aspect, an embodiment of this application provides a communication apparatus, including a processor and a memory. The memory is configured to store computer instructions. When the apparatus runs, the processor executes the computer instructions stored in the memory, to enable the apparatus to perform of any implementation method of the first aspect to the ninth aspect.

According to a fourteenth aspect, an embodiment of this application provides a communication apparatus, including a unit or means (means) configured to perform the steps of any implementation method of the first aspect to the ninth aspect.

According to a fifteenth aspect, an embodiment of this application provides a communication apparatus, including a processor and an interface circuit. The processor is configured to communicate with another apparatus through the interface circuit, and perform any implementation method of the first aspect to the ninth aspect. There are one or more processors.

According to a sixteenth aspect, an embodiment of this application provides a communication apparatus, including a processor coupled to a memory. The processor is configured to invoke a program stored in the memory, to perform any implementation method of the first aspect to the ninth aspect. The memory may be located inside or outside the apparatus. There may be one or more processors.

According to a seventeenth aspect, an embodiment of this application further provides a computer-readable storage medium. The computer-readable storage medium stores instructions. When the instructions are run on a communication apparatus, any implementation method of the first aspect to the ninth aspect is performed.

According to an eighteenth aspect, an embodiment of this application further provides a computer program product. The computer program product includes a computer program or instructions. When the computer program or the instructions is or are run by a communication apparatus, any implementation method of the first aspect to the ninth aspect is performed.

According to a nineteenth aspect, an embodiment of this application further provides a chip system, including a processor, configured to perform any implementation method of the first aspect to the sixth aspect.

According to a twentieth aspect, an embodiment of this application further provides a communication system, including a mobility management network element and an access network device. The mobility management network element is configured to perform any implementation method in the first aspect to the third aspect. The access network device is configured to send satellite coverage information of a cell in which a terminal device is located to the mobility management network element.

According to a twenty-first aspect, an embodiment of this application further provides a communication system, including a mobility management network element and an access network device. The mobility management network element is configured to perform any implementation method in the seventh aspect. The access network device is configured to perform any implementation method in the ninth aspect.

### BRIEF DESCRIPTION OF DRAWINGS

FIG. 1(a) is a schematic diagram of a 5G network architecture based on a service-based architecture;
FIG. 1(b) is a schematic diagram of a 5G network architecture based on a point-to-point interface;
FIG. 2 is a schematic flowchart of a communication method according to an embodiment of this application;
FIG. 3(a) is a schematic diagram of a periodic TAU cycle according to an embodiment of this application;
FIG. 3(b) is a schematic diagram of an eDRX cycle according to an embodiment of this application;
FIG. 3(c) is a schematic diagram of a sleep time period according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a schematic flowchart of a communication method according to an embodiment of this application;
FIG. 13(a) is a schematic diagram of a periodic TAU cycle or a periodic registration cycle according to an embodiment of this application;
FIG. 13(b) is another schematic diagram of a periodic TAU cycle or a periodic registration cycle according to an embodiment of this application;
FIG. 14 is a schematic flowchart of a communication method according to an embodiment of this application;
FIG. 15 is a schematic flowchart of a communication method according to an embodiment of this application;
FIG. 16(a) is a schematic flowchart of a communication method according to an embodiment of this application;
FIG. 16(b) is a schematic flowchart of a communication method according to an embodiment of this application;
FIG. 17 is a schematic diagram of a communication apparatus according to an embodiment of this application; and
FIG. 18 is a schematic diagram of a communication apparatus according to an embodiment of this application.

### DESCRIPTION OF EMBODIMENTS

To meet challenges of wireless broadband technologies and remain leading-edge advantages of a 3rd generation partnership project (3rd generation partnership project, 3GPP) network, the 3GPP specifications organization formulated a next generation mobile communications system (next generation system) architecture, which is referred to as a 5th generation (5th generation, 5G) network architecture. The architecture not only supports access to a 5G core network (core network, CN) by using a radio access technology (such as a long term evolution (long term evolution, LTE) access technology or a 5G radio access network (radio access network, RAN) access technology) defined by the 3GPP specifications organization, but also supports access to the core network by using a non-3GPP (non-3GPP) access technology through a non-3GPP interworking function (non-3GPP interworking function, N3IWF) or a next generation access gateway (next generation packet data gateway, ngPDG).

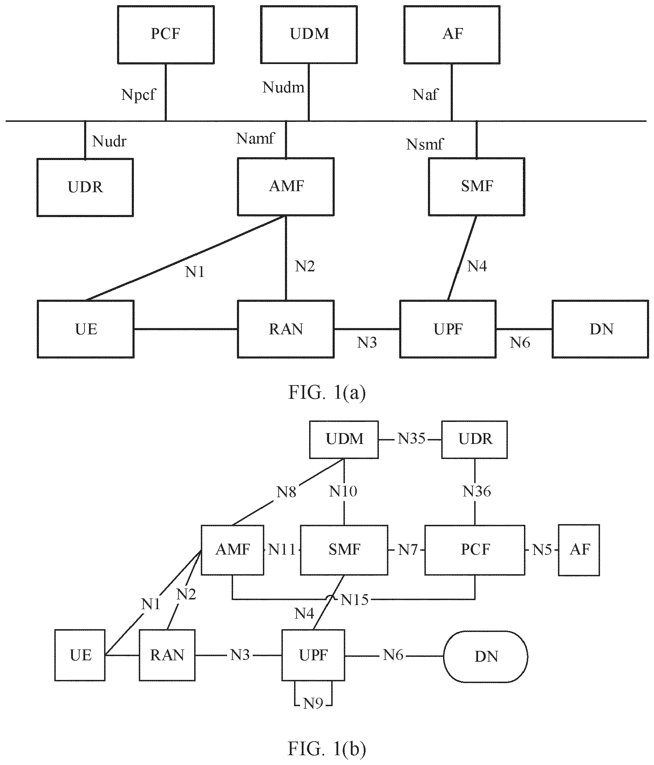

FIG. 1(a) is a schematic diagram of a 5G network architecture based on a service-based architecture. The 5G network architecture shown in FIG. 1(a) may include a terminal device, an access network device, and a core network device. The terminal device accesses a data network (data network, DN) by using the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a binding support function (binding support function, BSF) network element (not shown in the figure), and a network data analysis function (network data analysis function, NWDAF) network element (not shown in the figure).

The terminal device may be user equipment (user equipment, UE), a mobile station, a mobile terminal, or the like. The terminal device may be widely applied to various scenarios such as device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, self-driving, telemedicine, smart grid, smart furniture, smart office, a smart wearable device, smart transportation, and smart city. The terminal device may be a mobile phone, a tablet computer, a computer with a wireless transceiver function, a wearable device, a vehicle, an urban air transportation vehicle (such as an unmanned aerial vehicle or a helicopter), a ship, a robot, a robot ann, a smart home device, or the like.

The access network device may be a radio access network (RAN) device or a wireline access network (wireline access network, FAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation base station (next generation NodeB, gNB) in a 5G mobile communication system, a base station in a future mobile communication system, or a module or unit that completes some functions of a base station, such as a central unit (central unit, CU) or a distributed unit (distributed unit, DU). The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wired access network device includes but is not limited to: a wireline access gateway (wireline access gateway), a fixed-line phone network device, a switch, and a router.

The access network device and the terminal device may be at fixed locations, or may be movable. The access network device and the terminal device may be deployed terrestrially, including indoors or outdoors, or may be handheld or vehicle-mounted; or may be deployed on a water surface; or may be deployed on a plane, a balloon, or an artificial satellite in the sky.

The AMF network element includes functions such as mobility management and access authentication/authorization. In addition, the AMF network element is further responsible for transmitting a user policy between the terminal device and the PCF network element.

The SMF network element includes functions such as performing session management, executing a control policy delivered by the PCF network element, selecting the UPF network element, and allocating an internet protocol (internet protocol, IP) address of the terminal device.

The UPF network element includes functions such as user plane data forwarding, session/flow-level-based charging statistics, and bandwidth restriction.

The UDM network element includes functions such as subscription data management and user access authorization.

The UDR network element includes functions such as storage and retrieval of subscription data, policy data, application data, and other types of data.

The NEF network element is configured to support capability and event exposure.

The AF network element transfers a requirement of an application side for a network side, for example, a QoS requirement or user equipment status event subscription. The AF network element may be a third-party functional entity, or may be an operator-deployed application service, for example, an IP multimedia subsystem (IP Multimedia Subsystem, IMS) voice call service.

The PCF network element performs policy control functions such as session-level or service flow-level charging, QoS bandwidth guarantee and mobility management, and terminal policy decision. The PCF network element includes an access and mobility management policy control function (access and mobility management policy control function, AM PCF) network element and a session management policy control function (session management PCF, SM PCF) network element. The AM PCF network element may provide a mobility management policy, and the SM PCF network element may provide a session management policy.

The NRF network element may be configured to provide a network element discovery function, and provide, based on a request from another network element, network element information corresponding to a network element type. The NRF network element further provides a network element management service, for example, registration, update, and deregistration of a network element and subscription and push of a network element status.

The BSF network element may provide functions such as BSF service registration/deregistration/update, connection detection with the NRF network element, session binding information creation, terminal device information obtaining, and session binding information query for duplicate IP addresses.

The AUSF network element is responsible for authenticating a user, to determine whether the user or a device is allowed to access a network.

The NWDAF network element is mainly configured to collect data (including one or more of terminal device data, access network device data, core network element data, and third-party application data), provide a data analysis service based on a machine learning model, and output a data analysis result for a network, a network management system, and an application to execute a policy decision. The NWDAF network element may be an independent network element, or may be co-located with another network element. For example, the NWDAF network element is disposed in the PCF network element or the AMF network element.

The DN is a network outside a carrier network. The carrier network may access a plurality of DNs. A plurality of services may be deployed on the DN, and the DN may provide services such as a data service and/or a voice service for the terminal. For example, the DN is a private network of a smart factory, a sensor installed in a workshop of the smart factory may be the terminal, a control server of the sensor is deployed in the DN, and the control server may provide a service for the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be the terminal, and the mobile phone or the computer of the employee may access information, data resources, and the like on the internal office network of the company.

Npcf, Nufr, Nudm, Naf, Namf, and Nsmf in FIG. 1(a) are service-based interfaces respectively provided by the PCF, UDR, UDM, AF, AMF, and SMF, and are used to invoke corresponding service-based operations. N1, N2, N3, N4, and N6 are interface sequence numbers. The meanings of these interface sequence numbers are as follows.
(1) N1 represents an interface between the AMF and the terminal device, and may be configured to transmit non-access stratum (non-access stratum, NAS) signaling (for example, including a QoS rule from the AMF) to the terminal device, and the like.
(2) N2 represents an interface between the AMF and the access network device, and may be configured to transfer radio bearer control information from a core network side to the access network device, and the like.
(3) N3 represents an interface between the access network device and the UPF, and is mainly configured to transmit uplink and downlink user plane data between the access network device and the UPF.
(4) N4 represents an interface between the SMF and the UPF, and may be configured to transfer information between a control plane and a user plane, including delivery of forwarding rules, QoS control rules, traffic statistics rules, and the like from the control plane to the user plane, and reporting of user plane information.
(5) N6 represents an interface between the UPF and the DN, and is configured to transmit uplink and downlink user data flows between the UPF and the DN.

FIG. 1(b) is a schematic diagram of a 5G network architecture based on a point-to-point interface. For descriptions of functions of network elements in FIG. 1(b), refer to the descriptions of functions of corresponding network elements in FIG. 1(a). Details are not described again. A main difference between FIG. 1(b) and FIG. 1(a) lies in that an interface between control plane network elements in FIG. 1(a) is a service-based interface, and an interface between control plane network elements in FIG. 1(b) is a point-to-point interface.

In the architecture shown in FIG. 1(b), names and functions of the interfaces between the network elements are as follows.
(1) For meanings of N1, N2, N3, N4, and N6 interfaces, refer to the foregoing descriptions.
(2) N5 represents an interface between the AF and the PCF, and may be configured to deliver an application service request and report a network event.
(3) N7 represents an interface between the PCF and the SMF, and may be configured to deliver a protocol data unit (protocol data unit, PDU) session granularity control policy and a service data flow granularity control policy.
(4) N8 represents an interface between the AMF and the UDM, and may be used by the AMF to obtain, from the UDM, subscription data and authentication data related to access and mobility management, and used by the AMF to register mobility management related information of the terminal device with the UDM.
(5) N9 represents a user plane interface between the UPFs, and is configured to transmit uplink and downlink user data flows between the UPFs.
(6) N10 represents an interface between the SMF and the UDM, and may be used by the SMF to obtain, from the UDM, subscription data related to session management, and used by the SMF to register session related information of the terminal device with the UDM.
(7) N11 represents an interface between the SMF and the AMF, and may be configured to transfer PDU session tunnel information between the access network device and the UPF, transfer a control message sent to the terminal device, transfer radio resource control information sent to the access network device, and the like.
(8) N15 represents an interface between the PCF and the AMF, and may be configured to deliver a terminal policy and an access control related policy.
(9) N35 represents an interface between the UDM and the UDR, and may be used by the UDM to obtain user subscription data information from the UDR.
(10) N36 represents an interface between the PCF and the UDR, and may be used by the PCF to obtain policy related subscription data and application data related information from the UDR.

It may be understood that the foregoing network elements or functions may be network elements in a hardware device, software functions running on dedicated hardware, or virtualized functions instantiated on a platform (for example, a cloud platform). Optionally, the foregoing network elements or the functions may be implemented by one device, may be implemented by a plurality of devices, or may be one functional module in one device. This is not specifically limited in embodiments of this application.

In embodiments of this application, the mobility management network element may be a mobility management entity (mobility management entity, MME) in a 4th generation (4th generation, 4G) network, an AMF network element in a 5G network, or another network element that has a function of an MME or an AMF network element in a future communication system.

In embodiments of this application, the access network device may be an access network device (such as an eNB) in a 4G network, an access network device (such as a gNB) in a 5G network, or another network element that has a function of an access network device in a 4G network or an access network device in a 5G network in a future communication system.

In embodiments of this application, the policy control network element may be a policy and charging rules function (policy and charging rules function, PCRF) network element in a 4G network, a PCF network element in a 5G network, or another network element that has a function of a PCRF network element or a PCF network element in a future communication system.

In embodiments of this application, a storage network element may be a home subscriber server (home subscriber server, HSS) in a 4G network, a UDR network element in a 5G network, or another network element that has a function of an HSS or a UDR network element in a future communication system.

In embodiments of this application, meanings of periodic tracking area update (tracking area update, TAU) and periodic registration are consistent in embodiments of this application. The periodic TAU is a name in 4G, and the periodic registration is a name in 5G.

In embodiments of this application, a periodic TAU cycle may be represented by a periodic TAU timer (timer), and a periodic registration cycle may be represented by a periodic registration timer (timer). The periodic TAU timer is a name in 4G, and the periodic registration timer is a name in 5G.

In embodiments of this application, meanings of a detach procedure and a deregistration procedure are consistent in embodiments of this application. The detach procedure is a name in 4G, and the deregistration procedure is a name in 5G.

In embodiments of this application, a maximum waiting time may be downlink buffer duration in a 4G network, or may be a maximum waiting time in a 5G network, or may be another parameter including downlink buffer duration or a maximum waiting time in a future communication system.

mMTC is one of the important application scenarios of 5G networks, and is mainly oriented to various internet of things (internet of things, loT) service applications based on cellular networks, such as offshore/land/railway/air transportation, oil and gas exploration and measurement, environment monitoring, and mine development. To meet the foregoing requirements, in the 4G era, narrowband internet of things (narrowband internet of things, NB-IoT) and enhanced machine type communication (enhanced machine type communication, eMTC) (also referred to as long term evolution machine type communication (LTE-machine type communication, LTE-M)) are defined in 3GPP.

However, to ensure wider network coverage and further achieve global coverage without blind spots, low-earth orbit satellites emerge. The low-earth orbit satellites can assist the NB-IoT/eMTC to achieve global IoT coverage, to avoid network coverage problems caused by insufficient terrestrial network facilities.

5G is used as an example. After entering an idle state, a terminal device in an NB-IoT/eMTC scenario may enter a sleep state. In this case, the terminal device maintains coarse synchronization with an AMF on a core network side, to ensure that the AMF can sense when the terminal device enters the sleep state. When downlink data of the terminal device arrives, the UPF notifies the SMF, and then the SMF notifies the AMF. If the AMF finds that the terminal device is still in the sleep state and is unreachable, the AMF estimates a maximum waiting time based on a sleep time of the terminal device, and returns the maximum waiting time to the SMF, to indicate the SMF to wait based on the maximum waiting time and then perform downlink paging. In addition, the SMF determines maximum buffer duration based on the maximum waiting time, buffers the downlink data of the terminal device based on the maximum buffer duration, and waits until the terminal device is reachable.

There are mainly two power-saving manners of the terminal device: a power saving mode (power saving mode, PSM) and extended discontinuous reception (extended discontinuous reception, eDRX). The PSM means that the terminal device enters the sleep state after entering the idle state for a period of time, until there is an uplink service or periodic registration/periodic TAU. The eDRX means that when no service is transmitted, the terminal device enters the sleep state at a fixed time point, and wakes up within a specified time to listen to paging information on a network side. In this case, the terminal device is in a reachable state, and can receive a paging message from the network side. Unless otherwise specified, the eDRX discussed in this specification refers to eDRX in an idle state.

In 3GPP, the NB-IoT and the eMTC are introduced into a satellite network architecture, so that satellites support NB-IoT and eMTC in 4G. A 5G satellite architecture has been under research since R16 5G, aiming to integrate a 5G architecture with satellites.

Different from ground coverage, satellite coverage is always moving because satellites need to move around the earth regularly. In a satellite architecture research in R17 5G, an original concept of a fixed cell covered by a ground is still used. In other words, although a cell covered by a satellite is moving, an access network device on the ground maps the cell covered by the satellite to a fixed cell on the ground based on a correspondence between satellite coverage and the fixed cell on the ground, to ensure that a cell in which the terminal device is located and that is sensed by the core network side is still the fixed cell on the ground.

In addition, discontinuous coverage may exist in a specific ground area at the beginning of satellite deployment or for the sake of deployment costs. For example, at an oilfield mining site located in a desert, one or more satellites may provide network communication services for the oilfield mining site only in a specific time period when rotating around the earth regularly, for example, collecting and reporting data of various sensors for oilfield mining. In other words, the network communication services provided by the satellite for the terminal device on the ground have discontinuous coverage. Therefore, the terminal device is covered by the satellite network in some time periods, and is not covered by the satellite network in another time period.

The discontinuous coverage feature causes the following problems.

Problem 1: The terminal device may not be covered by the satellite network for a long time. However, eDRX in a conventional NB-IoT or eMTC scenario has relatively short sleep time, and therefore cannot be used in this scenario. In other words, based on a sleep manner of the eDRX in the conventional NB-IoT or eMTC scenario, when waking up after the sleep ends, the terminal device may still be in a scenario in which the terminal device is not covered by the satellite network.

Problem 2: When downlink data arrives on a network side, a core network cannot determine whether the terminal device is in a reachable state, and it is difficult to ensure successful paging.

In embodiments of this application, satellite coverage information of the terminal device indicates a time period in which the terminal device is covered by the satellite network and/or a time period in which the terminal device is not covered by the satellite network. For example, the satellite coverage information of the terminal device indicates that the terminal device is not covered by the satellite network from 8:00 a.m. to 9:00 a.m. every day, and/or indicates that the terminal device is covered by the satellite network from 00:00 a.m. to 8:00 a.m. and from 9:00 a.m. to 00:00 a.m. every day. The satellite coverage information of the terminal device may be satellite coverage information corresponding to a location of the terminal device, or satellite coverage information of a satellite cell in which the terminal device is located, or satellite coverage information corresponding to a tracking area (Tracking Area, TA) in which the terminal device is located. For example, if the terminal device is located in a cell 1, the satellite coverage information of the terminal device may be satellite coverage information of the cell 1. For another example, if the terminal device is located in a cell 2, the satellite coverage information of the terminal device may be satellite coverage information of the cell 2. Alternatively, the satellite coverage information of the terminal device in embodiments of this application may be ephemeris information.

In embodiments of this application, ephemeris information of a cell is a regularity of rotation of a satellite that corresponds to the cell and that is around the earth. For example, the ephemeris information includes a satellite orbit plane parameter and a satellite parameter, such as a satellite moving speed, a satellite moving direction, a distance from a satellite orbit to the ground, and a reference time point. A time period in which the cell is covered by a satellite network and/or a time period in which the cell is not covered by the satellite network may be learned of based on one or more pieces of ephemeris information of the satellite corresponding to the satellite cell. Satellite coverage information of the cell indicates the time period in which the cell is covered by the satellite network and/or the time period in which the cell is not covered by the satellite network. For example, there are three satellite cells under an access network device: a satellite cell 1, a satellite cell 2, and a satellite cell 3. In this case, an N2 setup message includes identification information of the satellite cell 1, ephemeris information 1 or satellite coverage information 1 corresponding to the satellite cell 1, identification information of the satellite cell 2, ephemeris information 2 or satellite coverage information 2 corresponding to the satellite cell 2, identification information of the satellite cell 3, and ephemeris information 3 or satellite coverage information 3 corresponding to the satellite cell 3.

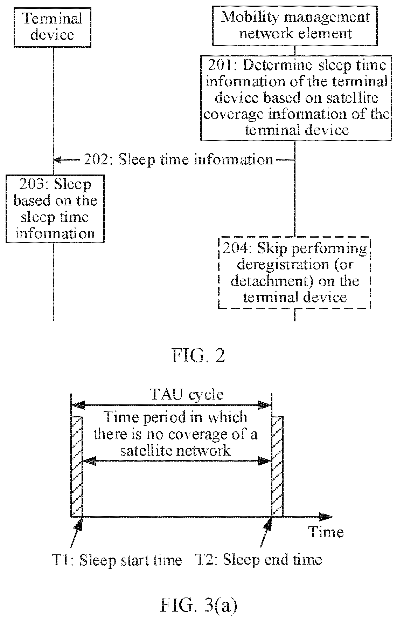

FIG. 2 is a schematic flowchart of a communication method according to an embodiment of this application. The method may be used to resolve the foregoing problem 1. The method includes the following steps.

Step 201: A mobility management network element determines sleep time information of a terminal device based on satellite coverage information of the terminal device.

In an implementation method, after an access network device is powered on, the access network device needs to establish a connection to the mobility management network element. A 5G network is used as an example. An interface is an N2 interface. Therefore, the access network device sends an N2 setup message to the mobility management network element. The N2 setup message may carry identification information of a satellite cell of the access network device and ephemeris information or satellite coverage information of a satellite corresponding to each satellite cell. Subsequently, when the terminal device registers with a network, the mobility management network element may obtain information about a satellite cell in which the terminal device is located. For example, if the terminal device is located in a satellite cell 1 of the access network device, the mobility management network element determines that satellite coverage information of the cell 1 is the satellite coverage information of the terminal device. If the mobility management network element receives, from the access network device, ephemeris information of a satellite corresponding to the cell 1, the mobility management network element further needs to first determine the satellite coverage information of the cell 1 based on the ephemeris information of the satellite corresponding to the cell 1. Optionally, the mobility management network element may further store the satellite coverage information as satellite coverage information of the terminal device that accesses a network from the cell 1.

In another implementation method, alternatively, in a process in which the terminal device registers with a network, the access network device may send, to the mobility management network element, ephemeris information or satellite coverage information of a satellite corresponding to a satellite cell in which the terminal device is located. For example, the terminal device sends a registration request message to the access network device. After receiving the registration request message, when sending the registration request message to the mobility management network element, the access network device further sends the ephemeris information or the satellite coverage information of the satellite corresponding to the satellite cell in which the terminal device is located, that is, adds the ephemeris information or the satellite coverage information of the satellite corresponding to the satellite cell in which the terminal device is located to an initial N2 message. If the access network device sends the ephemeris information of the satellite corresponding to the satellite cell in which the terminal device is located, the mobility management network element needs to determine, based on the ephemeris information, the satellite coverage information of the satellite cell in which the terminal device is located. Then, the mobility management network element uses the satellite coverage information of the cell as the satellite coverage information of the terminal device.

In another implementation method, a third-party network element, for example, an application server outside a core network, or a network element dedicated to interaction with a satellite or a network element dedicated to satellite management in a core network, may send, to the mobility management network element, ephemeris information or satellite coverage information of a satellite corresponding to a satellite cell in which the terminal device is located. If the third-party network element sends the ephemeris information of the satellite corresponding to the satellite cell in which the terminal device is located, the mobility management network element needs to determine, based on the ephemeris information, the satellite coverage information of the satellite cell in which the terminal device is located. Then, the mobility management network element uses the satellite coverage information of the cell as the satellite coverage information of the terminal device.

A sleep time period corresponding to the sleep time information includes a time period in which the terminal device is not covered by a satellite network.

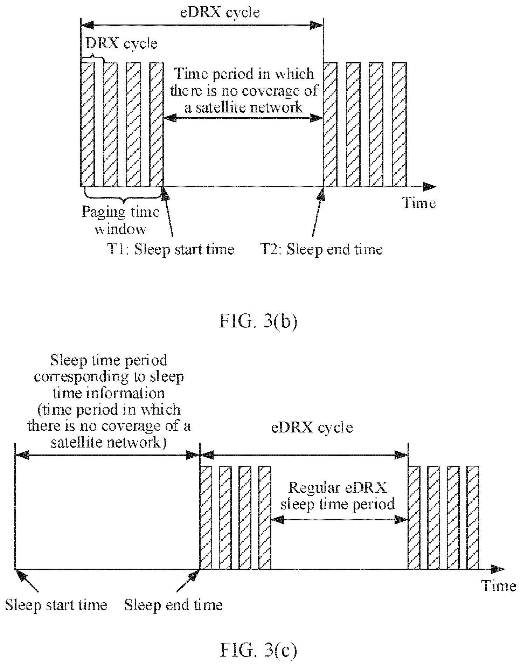

In an implementation method, the mobility management network element further determines one or more of an eDRX cycle, a periodic TAU cycle, or a periodic registration cycle of the terminal device based on the satellite coverage information, and a sleep time period corresponding to the sleep time information is included in a sleep time range of the eDRX cycle, the periodic TAU cycle, or the periodic registration cycle. In this implementation method, the sleep time information herein includes a sleep start time, and the sleep start time is within the eDRX cycle, the periodic TAU cycle, or the periodic registration cycle. FIG. 3(a) is a schematic diagram of a periodic TAU cycle. At a start moment of the periodic TAU cycle, the terminal device executes a periodic TAU procedure, initiates a network connection, and then enters a sleep state from a sleep start time. In addition, a sleep time period of the terminal device in the periodic TAU cycle includes a time period in which the terminal device is not covered by a satellite network. Therefore, it can be ensured that the terminal device enters the sleep state in the time period in which the terminal device is not covered by the satellite network, to prevent the terminal device from executing the periodic TAU procedure in the time period without network coverage. This reduces power consumption of the terminal device. Sleep duration is greater than or equal to duration in which the terminal device is not covered by the satellite network. Refer to FIG. 3(a). A moment T1 is a sleep start time, a moment T2 is a sleep end time, and T2 is also an end time of the TAU cycle. A difference between T2 and T1 is equal to the duration in which the terminal device is not covered by the satellite network. The sleep time information determined in step 201 is the sleep start time in the example in FIG. 3(a). In a 4G network, the procedure is generally referred to as a periodic TAU procedure, and in a 5G network, the procedure is referred to as a periodic registration procedure. FIG. 3(b) is a schematic diagram of an eDRX cycle. In a paging time window after a start of the eDRX cycle, the terminal device performs listening based on a DRX cycle, and if there is no network connection requirement after the paging time window arrives, the terminal device starts to enter a sleep state at a sleep start time. In addition, a sleep time period of the terminal device in the eDRX cycle includes a time period in which the terminal device is not covered by a satellite network. Therefore, it can be ensured that the terminal device enters the sleep state in the time period in which the terminal device is not covered by the satellite network, to prevent the terminal device from waking up in the time period in which the terminal device is not covered by the satellite network to listen to a paging message. This reduces power consumption of the terminal device. Sleep duration is greater than or equal to duration in which the terminal device is not covered by the satellite network. Refer to FIG. 3(b). A moment T1 is a sleep start time, a moment T2 is a sleep end time, and T2 is also an end time of the eDRX cycle. A difference between T2 and T1 is greater than or equal to the duration in which the terminal device is not covered by the satellite network. The sleep time information determined in step 201 includes the sleep start time in the example in FIG. 3(b).

In another implementation method, the sleep time information includes a sleep start time and a sleep end time, and a sleep time period between the sleep start time and the sleep end time includes a time period in which the terminal device is not covered by a satellite network. Alternatively, the sleep time information includes a sleep start time and sleep duration, and the sleep end time may be obtained based on the sleep start time and the sleep duration. In a sleep time period corresponding to the sleep time information, the terminal device keeps sleeping and does not execute a service, including skipping executing a periodic TAU procedure or a periodic registration procedure. In the method, the time period that is indicated by the satellite coverage information of the terminal device and in which the terminal device is not covered by the satellite network is not included in any eDRX cycle or TAU cycle, but is a separate sleep time period. FIG. 3(c) is a schematic diagram of a sleep time period. The sleep time information indicates a separate sleep time period. The sleep time period overlaps the time period in which the terminal device is not covered by the satellite network, or the sleep time period is longer than the time period in which the terminal device is not covered by the satellite network. In the sleep time period, the terminal device enters a sleep state, so that it can be ensured that the terminal device enters the sleep state in the time period in which the terminal device is not covered by the satellite network. This can avoid an unnecessary and ineffective network connection, and reduce power consumption of the terminal device. Refer to FIG. 3(c). A moment T1 is a sleep start time, a moment T2 is a sleep end time. A time period between T1 and T2 overlaps with the time period in which the terminal device is not covered by the satellite network or is longer than the time period in which the terminal device is not covered by the satellite network. Optionally, after the sleep time period, an eDRX cycle is entered. The eDRX cycle may be determined based on an existing solution. There is also a sleep time period in the eDRX cycle, and the sleep time period may be referred to as a regular eDRX sleep time period. The sleep time information determined in step 201 includes the sleep start time and the sleep end time in the example in FIG. 3(c). Alternatively, the sleep time information determined in step 201 includes the sleep start time and the sleep duration in the example in FIG. 3(c).

Step 202: The mobility management network element sends the sleep time information to the terminal device. Correspondingly, the terminal device receives the sleep time information.

In an implementation method, the mobility management network element may include the sleep time information in a registration accept message sent to the terminal device. Optionally, the registration accept message further includes one or more of an eDRX cycle, a periodic registration cycle, or a periodic TAU cycle. A 4G network is used as an example, the sleep time information may be carried in an attach accept message or a TAU accept message sent to the terminal device.

Step 203: The terminal device sleeps based on the sleep time information.

Specifically, the terminal device enters the sleep state in the sleep time period corresponding to the sleep time information, where the sleep time period includes the time period in which the terminal device is not covered by the satellite network.

Step 204: When a deregistration timer (or a detach timer) corresponding to the terminal device expires, the mobility management network element determines, based on the satellite coverage information, that the terminal device is not covered by the satellite network, and determines to skip performing deregistration (or detachment) on the terminal device.

Step 204 is an optional step.

Skipping performing deregistration on the terminal device may also be understood as keeping a registration state of the terminal device unchanged. Skipping performing detachment on the terminal device may also be understood as keeping an attachment state of the terminal device unchanged.

In a 4G network, when the detach timer (or an implicit detach timer) corresponding to the terminal device expires, if the mobility management network element, that is, an MME, determines, based on the satellite coverage information, that the terminal device is not covered by the satellite network, the mobility management network element determines to skip performing detachment on the terminal device, that is, keeps a current mobility management state of the terminal device as an attachment or EMM-registered state (EPS Mobility Management-Registered, EMM-Registered). If the mobility management network element determines, based on the satellite coverage information, that the terminal device is covered by the satellite network, the mobility management network element determines to perform detachment on the terminal device, that is, changes a current mobility management state of the terminal device to a detached or EMM-deregistered state. According to this solution, when the terminal device is not covered by the satellite network, the mobility management network element does not execute a detach procedure on the terminal device, so that switching of a status of the terminal device back and forth between attachment or detachment or between registration and deregistration may be reduced, thereby reducing signaling interaction between the terminal device and a network, and reducing power consumption of the terminal device. This is because when the terminal device is not covered by the satellite network, the power consumption of the terminal device is low. If the mobility management network element detaches the terminal device, the terminal device needs to be re-attached after the terminal device is covered by the satellite network subsequently. Consequently, more signaling interaction is caused, and the power consumption of the terminal device increases.

In a 5G network, when the deregistration timer (or an implicit detach timer) corresponding to the terminal device expires, if the mobility management network element, that is, an AMF, determines, based on the satellite coverage information, that the terminal device is not covered by the satellite network, the mobility management network element determines to skip performing deregistration on the terminal device. If the mobility management network element determines, based on the satellite coverage information, that the terminal device is covered by the satellite network, the mobility management network element determines to skip performing registration on the terminal device, that is, keeps the terminal device in a registered state currently. According to this solution, when the terminal device is not covered by the satellite network, the mobility management network element does not deregister the terminal device, so that switching of a status of the terminal device back and forth between registration and deregistration may be reduced, thereby reducing signaling interaction between the terminal device and a network, and reducing power consumption of the terminal device. This is because when the terminal device is not covered by the satellite network, the power consumption of the terminal device is low. If the mobility management network element deregisters the terminal device, the terminal device needs to be re-registered after the terminal device is covered by the satellite network subsequently. Consequently, more signaling interaction is caused, and the power consumption of the terminal device increases.

According to the foregoing solutions, the mobility management network element determines the sleep time information based on the satellite coverage information of the terminal device, and the sleep time period corresponding to the sleep time information includes the time period in which the terminal device is not covered by the satellite network, to ensure that the terminal device can sleep as much as possible in the time period in which the terminal device is not covered by the satellite network, and avoid unnecessary network connection operations such as cell scanning and cell selection, to reduce power consumption of the terminal device.

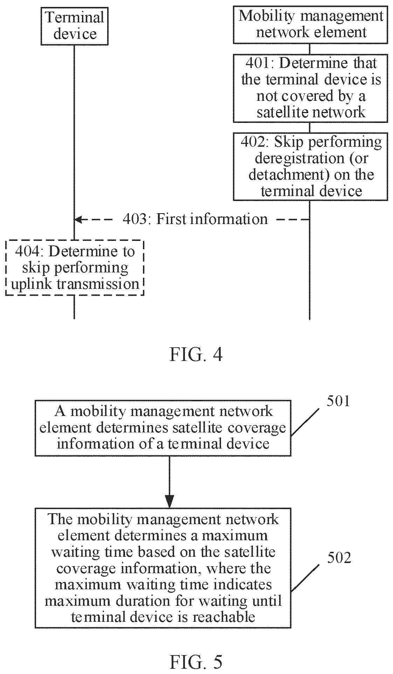

FIG. 4 is a schematic flowchart of a communication method according to an embodiment of this application. The method may be used to resolve the foregoing problem 1. The method includes the following steps.

Step 401: When a deregistration timer (or a detach timer) corresponding to a terminal device expires, a mobility management network element determines, based on satellite coverage information of the terminal device, that the terminal device is not covered by a satellite network.

For an implementation method for determining the satellite coverage information of the terminal device by the mobility management network element, refer to the descriptions of step 201. Details are not described again.

The deregistration timer may also be an implicit deregistration timer. This is not limited in this specification. The detach timer may also be an implicit detach timer. This is not limited in this specification.

Step 402: The mobility management network element determines to skip performing deregistration (or detachment) on the terminal device.

Skipping performing deregistration on the terminal device may also be understood as keeping a registration state of the terminal device unchanged. Skipping performing detachment on the terminal device may also be understood as keeping an attachment state of the terminal device unchanged, that is, keeping the terminal device always in an EMM-registered state. Optionally, a case in which the terminal device is not deregistered is in response to a case in which the terminal device is not covered by the satellite network.

In a 4G network, when the detach timer corresponding to the terminal device expires, if the mobility management network element, that is, an MME, determines, based on the satellite coverage information, that the terminal device is not covered by the satellite network, the mobility management network element determines to skip performing detachment on the terminal device, that is, keeps a current mobility management state of the terminal device as an attachment or EMM-registered state. If the mobility management network element determines, based on the satellite coverage information, that the terminal device is covered by the satellite network, the mobility management network element determines to perform detachment on the terminal device, that is, changes a current mobility management state of the terminal device to a detached or EMM-deregistered state. According to this solution, when the terminal device is not covered by the satellite network, the mobility management network element does not execute a detach procedure on the terminal device, so that switching of a status of the terminal device back and forth between attachment or detachment may be reduced, thereby reducing signaling interaction between the terminal device and a network, and reducing power consumption of the terminal device. This is because when the terminal device is not covered by the satellite network, the power consumption of the terminal device is low. If the mobility management network element detaches the terminal device, the terminal device needs to be re-attached after the terminal device is covered by the satellite network subsequently. Consequently, more signaling interaction is caused, and the power consumption of the terminal device increases.

In a 5G network, when the deregistration timer corresponding to the terminal device expires, if the mobility management network element, that is, an AMF, determines, based on the satellite coverage information, that the terminal device is not covered by the satellite network, the mobility management network element determines to skip performing deregistration on the terminal device. If the mobility management network element determines, based on the satellite coverage information, that the terminal device is covered by the satellite network, the mobility management network element determines to skip performing registration on the terminal device, that is, keeps the terminal device in a registered state currently. According to this solution, when the terminal device is not covered by the satellite network, the mobility management network element does not deregister the terminal device, so that switching of a status of the terminal device back and forth between registration and deregistration may be reduced, thereby reducing signaling interaction between the terminal device and a network, and reducing power consumption of the terminal device. This is because when the terminal device is not covered by the satellite network, the power consumption of the terminal device is low. If the mobility management network element deregisters the terminal device, the terminal device needs to be re-registered after the terminal device is covered by the satellite network subsequently. Consequently, more signaling interaction is caused, and the power consumption of the terminal device increases.

According to the foregoing solutions, because switching of the status of the terminal device back and forth between registration and deregistration or between attachment and detachment is reduced, signaling interaction between the terminal device and the network can be reduced, and the power consumption of the terminal device can be reduced.

In an implementation method, after step 402, the following step 403 and step 404 may be further performed.

Step 403: The mobility management network element sends first information to the terminal device. Correspondingly, the terminal device receives the first information.

The first information indicates that the terminal device performs uplink transmission based on a satellite network coverage status when the terminal device has an uplink transmission requirement.

Step 404: When there is the uplink transmission requirement, if the terminal device determines, based on the first information, that the terminal device is not covered by the satellite network, the terminal device determines to skip performing uplink transmission.

The uplink transmission requirement herein includes but is not limited to one or more of periodic TAU, periodic registration, or uplink data transmission.

In an implementation method, the first information is the satellite coverage information of the terminal device described in step 401. The mobility management network element sends the satellite coverage information of the terminal device to the terminal device, to indicate the terminal device to perform uplink transmission based on the satellite coverage information when the terminal device has the uplink transmission requirement. Therefore, when the terminal device has the uplink transmission requirement, whether the terminal device is currently covered by the satellite network is determined based on the satellite coverage information. If the terminal device is not covered by the satellite network, it is determined to skip performing uplink transmission. If the terminal device is covered by the satellite network, it is determined to perform uplink transmission.

In another implementation method, the first information is indication information, and the indication information specifically indicates that the terminal device checks the satellite network coverage status when having the uplink transmission requirement, and performs uplink transmission based on the satellite network coverage status. Therefore, when the terminal device has the uplink transmission requirement, the terminal device first checks whether the terminal device is currently covered by the satellite network. If the terminal device is not covered by the satellite network, it is determined to skip performing uplink transmission. If the terminal device is covered by the satellite network, it is determined to perform uplink transmission.

In another implementation method, in step 403, when sending the first information to the terminal device, the mobility management network element further sends the satellite coverage information of the terminal device to the terminal device. In this case, the first information herein is indication information, and the indication information specifically indicates that the terminal device performs uplink transmission based on the satellite coverage information when having the uplink transmission requirement. Therefore, when the terminal device has the uplink transmission requirement, the terminal device determines, based on the satellite coverage information, whether the terminal device is covered by the satellite network. If the terminal device is not covered by the satellite network, it is determined to skip performing uplink transmission. If the terminal device is covered by the satellite network, it is determined to perform uplink transmission.

According to the solutions in step 403 and step 404, when the terminal device is not covered by the satellite network, even if there is an uplink transmission requirement, the terminal device skips performing uplink transmission, so that unnecessary and ineffective network connection operations such as cell scanning and cell selection can be avoided, thereby reducing power consumption of the terminal device.

FIG. 5 is a schematic flowchart of a communication method according to an embodiment of this application. The method may be used to resolve the foregoing problem 2. The method includes the following steps.

Step 501: A mobility management network element determines satellite coverage information of a terminal device.

In an implementation method, the mobility management network element may determine the satellite coverage information of the terminal device according to the method described in step 201.

In another implementation method, the mobility management network element may alternatively determine the satellite coverage information of the terminal device by using the following method: The mobility management network element sends a paging message to an access network device, where the paging message includes identification information of the terminal device in an idle state, and the paging message indicates to page the terminal device. Then, the access network device pages the terminal device. If the access network device determines that a cell in which the terminal device is located is not currently covered by a satellite network, the access network device fails in paging. Therefore, the access network device sends a first message to the mobility management network element. The first message includes a paging failure indication and satellite coverage information of a satellite cell in which the terminal device is located. The paging failure indication indicates that a reason for this paging failure is that the terminal device is not covered by the satellite network. Optionally, the paging failure indication further indicates that the mobility management network element needs to perform reachability determining/paging based on the satellite coverage information. The satellite coverage information of the satellite cell in which the terminal device is located is the satellite coverage information of the terminal device.

In another implementation method, the mobility management network element may alternatively determine the satellite coverage information of the terminal device by using the following method: The mobility management network element sends a paging message to an access network device, where the paging message includes identification information of the terminal device in an idle state, and the paging message indicates to page the terminal device. Then, the access network device pages the terminal device. If the access network device determines that a cell in which the terminal device is located is not currently covered by a satellite network, the access network device fails in paging. Therefore, the access network device sends a first message to the mobility management network element. The first message includes satellite coverage information of a satellite cell in which the terminal device is located. The satellite coverage information of the satellite cell in which the terminal device is located is the satellite coverage information of the terminal device. In addition, the satellite coverage information indicates that a reason for this paging failure is that the terminal device is not covered by the satellite network. Optionally, the satellite coverage information further indicates that the mobility management network element needs to perform reachability determining/paging based on the satellite coverage information.

In an implementation method, when the mobility management network element is an AMF network element in 5G, the AMF network element may perform step 501 after receiving a downlink data arrival notification from an SMF network element, in other words, the downlink data arrival notification triggers the mobility management network element to perform step 501.

In an implementation method, when the mobility management network element is an MME in 4G, the MME may perform step 501 after determining that downlink data on a user plane needs to be transmitted.

Step 502: The mobility management network element determines a maximum waiting time based on the satellite coverage information, where the maximum waiting time indicates maximum duration for waiting until the terminal device is reachable.

The maximum waiting time herein needs to cover a time period in which the terminal device is not covered by the satellite network, or it is understood that after the maximum waiting time arrives, the terminal device should be covered by the satellite network. The maximum waiting time may be downlink buffer duration in 4G or maximum waiting duration in 5G.

Optionally, before step 502, the mobility management network element further determines, based on the satellite coverage information, that the terminal device is unreachable.

In a 4G network, the mobility management network element is an MME. After determining the maximum waiting time, the MME may determine downlink data buffer expiration duration based on the maximum waiting time, to indicate whether data of the terminal device is currently buffered on a core network side. After the downlink data buffer expiration duration expires, the MME determines that there is no downlink buffer data of the terminal device currently. In the 4G network, the maximum waiting time may also be referred to as downlink data buffer time.

In a 5G network, the mobility management network element is an AMF network element. After determining the maximum waiting time, the AMF network element may send the maximum waiting time to the SMF network element. Then, the SMF network element may determine an extended buffer time based on the maximum waiting time. The extended buffer time indicates specific duration for which a user plane network element buffers downlink data. After the extended buffer time arrives and the buffered data is still not sent to the terminal device, the SMF discards the corresponding buffered data. In the 5G network, the maximum waiting time may also be referred to as an estimated maximum waiting time.

According to the foregoing solutions, the mobility management network element may determine reachability based on the satellite coverage information of the terminal device. If the terminal device is unreachable, the mobility management network element determines the maximum waiting time based on the satellite coverage information, to ensure that when the terminal device is not covered by the satellite network, the terminal device is not paged and the downlink data is not sent to the terminal device. This reduces power consumption of the mobility management network element and reduces a data loss.

In an implementation method, before step 201, step 401, and/or step 501, the mobility management network element further determines that a location of the terminal device is fixed or a moving track of the terminal device is fixed. Alternatively, it is understood that the mobility management network element determines that the terminal device is a terminal device at a fixed location or a terminal device with a fixed moving track. For example, the mobility management network element may obtain subscription information of the terminal device, and determine, based on the subscription information of the terminal device, that the location of the terminal device is fixed or the moving track of the terminal device is fixed. In other words, the mobility management network element performs the solutions in the embodiments corresponding to FIG. 2, FIG. 4, and/or FIG. 5 only for a terminal device with a fixed location or a fixed moving track. The fixed moving track may be understood as that the terminal device has specific mobility, but the moving track of the terminal device is predictable, and a network side can sense a geographical location of the terminal device.

The following describes the foregoing solutions with reference to a specific example. The following solutions are applicable to a 4G network, a 5G network, or a future communication network such as a 6G network.

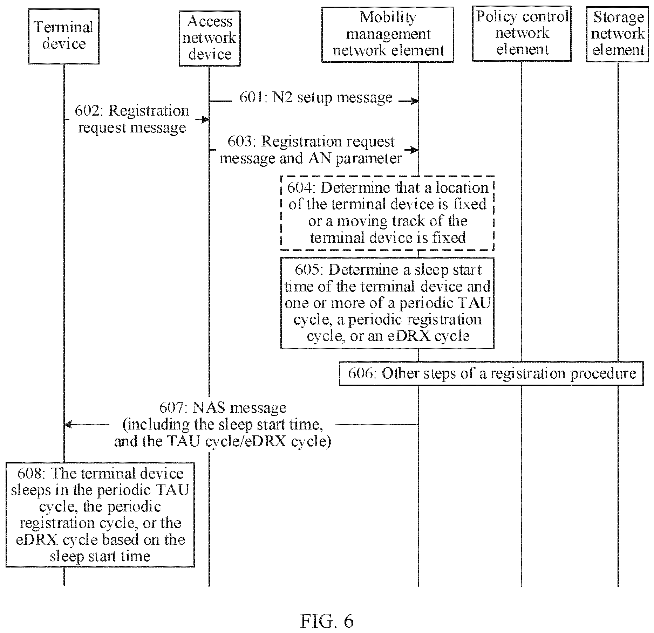

FIG. 6 is a schematic flowchart of a communication method according to an embodiment of this application. This solution is a specific implementation of the embodiment corresponding to FIG. 2.

The method includes the following steps.

Step 601: An access network device sends an N2 setup message (N2 setup message) to a mobility management network element. Correspondingly, the mobility management network element receives the N2 setup message.

After the access network device is powered on, the N2 setup message is sent in a procedure of establishing an N2 interface between the access network device and the mobility management network element. If a current network is a 4G network, the N2 interface corresponds to an S1-MME interface in the 4G network.

Optionally, the N2 setup message includes identification information of a satellite cell of the access network device and ephemeris information or satellite coverage information of a satellite corresponding to each satellite cell.

Step 602: A terminal device sends a registration request message to the access network device. Correspondingly, the access network device receives the registration request message.

The registration request message is used to request to register with a network.

The registration request message may be a registration request message in a 5G network, or may be an attach message or a TAU request message in the 4G network.

Step 603: The access network device sends the registration request message and an access network (access network, AN) parameter to the mobility management network element. Correspondingly, the mobility management network element receives the registration request message and the AN parameter. The registration request message is carried by the terminal device in a NAS message sent to the mobility management network element. The AN parameter is added by the access network device to an initial N2 message, and is sent to the mobility management network element side together with the registration request message.

If the N2 setup message in step 601 does not carry the identification information of the satellite cell of the access network device and the ephemeris information or the satellite coverage information corresponding to each satellite cell, in a subsequent registration procedure of the terminal device, the AN parameter added by the access network device may include ephemeris information or satellite coverage information corresponding to a satellite cell in which the terminal device is located.

Step 604: The mobility management network element determines that a location or a moving track of the terminal device is fixed.

Alternatively, it is understood that the mobility management network element determines that the terminal device is a terminal device at a fixed location or a terminal device with a fixed moving track.

In an implementation method, the mobility management network element may obtain subscription information of the terminal device, and determine, based on the subscription information of the terminal device, that the location of the terminal device is fixed or the moving track of the terminal device is fixed.

Step 604 is an optional step.

Step 605: The mobility management network element determines, based on the ephemeris information or the satellite coverage information corresponding to the satellite cell in which the terminal device is located, a sleep start time of the terminal device and one or more of a periodic TAU cycle, a periodic registration cycle, or an eDRX cycle.

If the mobility management network element receives, from the access network device, the ephemeris information corresponding to the satellite cell in which the terminal device is located, the mobility management network element determines, based on the ephemeris information corresponding to the satellite cell in which the terminal device is located, the satellite coverage information corresponding to the satellite cell in which the terminal device is located.

Periodic TAU corresponds to a periodic registration procedure in the 5G network, and corresponds to a periodic TAU procedure in the 4G network.

The satellite coverage information corresponding to the satellite cell in which the terminal device is located is satellite coverage information of the terminal device.

In an implementation method, a time period that is indicated by the satellite coverage information of the terminal device and in which the terminal device is not covered by a satellite network is included in a periodic registration cycle, or it is understood that a sleep time period in the periodic registration cycle includes a time period that is indicated by the satellite coverage information of the terminal device and in which the terminal device is not covered by a satellite network. For a specific example of the implementation method, refer to FIG. 3(a).

In an implementation method, a time period that is indicated by the satellite coverage information of the terminal device and in which the terminal device is not covered by a satellite network is included in an eDRX cycle, or it is understood that a sleep time period in the eDRX cycle includes a time period that is indicated by the satellite coverage information of the terminal device and in which the terminal device is not covered by a satellite network. For a specific example of the implementation method, refer to FIG. 3(b).

Step 606: Other steps of a registration procedure.

Step 607: The mobility management network element sends a non-access stratum (non-access stratum, NAS) message to the terminal device. Correspondingly, the terminal device receives the NAS message.

The NAS message includes the sleep start time, and further includes one or more of the periodic TAU cycle, the eDRX cycle, or the periodic registration cycle.

In an implementation method, the NAS message includes a registration accept message, an attach accept message, or a TAU accept message. The message includes the sleep start time, and further includes one or more of the periodic registration cycle, the periodic TAU cycle, or the eDRX cycle.

Step 608: The terminal device sleeps in the periodic TAU cycle, the periodic registration cycle, or the eDRX cycle based on the sleep start time.

In an implementation method, the terminal device enters a sleep state from the sleep start time in the periodic TAU cycle, and ends the sleep state when the periodic TAU cycle ends. A sleep time period of the terminal device includes the time period in which the terminal device is not covered by the satellite network. For example, the terminal device may sleep according to the method shown in FIG. 3(a).

In an implementation method, the terminal device enters a sleep state from the sleep start time in the eDRX cycle, and ends the sleep state when the eDRX cycle ends. A sleep time period of the terminal device includes the time period in which the terminal device is not covered by the satellite network. For example, the terminal device may sleep according to the method shown in FIG. 3(b).

According to the foregoing solutions, in a registration process of the terminal device, the mobility management network element determines the sleep start time and one or more of the eDRX cycle, the periodic TAU cycle, or the periodic registration cycle based on the ephemeris information or the satellite coverage information that corresponds to the cell and that is provided by the access network device, to ensure that the terminal device can sleep as much as possible in the time period in which the terminal device is not covered by the satellite network, and avoid unnecessary network connection operations such as cell scanning and cell selection, to reduce power consumption of the terminal device.

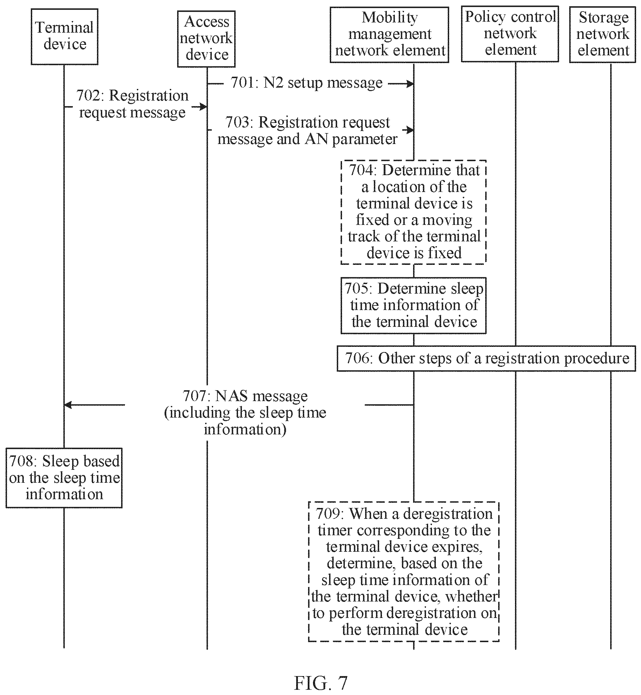

FIG. 7 is a schematic flowchart of a communication method according to an embodiment of this application. This solution is a specific implementation of the embodiment corresponding to FIG. 2. The method includes the following steps.

Step 701 to step 704 are the same as step 601 to step 604.

Step 704 is an optional step.

Step 705: A mobility management network element determines sleep time information of a terminal device based on ephemeris information or satellite coverage information corresponding to a satellite cell in which the terminal device is located.

If the mobility management network element receives, from an access network device, the ephemeris information corresponding to the satellite cell in which the terminal device is located, the mobility management network element determines, based on the ephemeris information corresponding to the satellite cell in which the terminal device is located, the satellite coverage information corresponding to the satellite cell in which the terminal device is located. The satellite coverage information corresponding to the satellite cell in which the terminal device is located is satellite coverage information of the terminal device.

In an implementation method, the sleep time information includes a sleep start time and a sleep end time, and a sleep time period between the sleep start time and the sleep end time is a time period in which the terminal device is not covered by a satellite network.

In an implementation method, the sleep time information includes a sleep start time and a sleep end time, and a sleep time period between the sleep start time and the sleep end time includes a time period in which the terminal device is not covered by a satellite network, in other words, the sleep time period indicated by the sleep start time and the sleep end time is longer than the time period in which the terminal device is not covered by the satellite network.

In another implementation method, the sleep time information includes a sleep start time and sleep duration, and the sleep end time may be obtained based on the sleep start time and the sleep duration.

In the sleep time period corresponding to the sleep time information, the terminal device keeps sleeping and does not execute a service, even if periodic TAU, periodic registration, or transmission on to-be-transmitted uplink data is not performed.

Optionally, the mobility management network element may determine, based on service information and according to an existing method, one or more of an eDRX cycle, a periodic TAU cycle, or a periodic registration cycle in the time period in which the terminal device is covered by the satellite network.

In an implementation method, the time period that is indicated by the satellite coverage information of the terminal device and in which the terminal device is not covered by the satellite network is not included in any eDRX cycle, periodic TAU cycle, or periodic registration cycle, but is a separate sleep time period.

Step 706: Other steps of a registration procedure.

Step 707: The mobility management network element sends a NAS message to the terminal device. Correspondingly, the terminal device receives the NAS message.

The NAS message includes the sleep time information. Optionally, the NAS message further includes one or more of the eDRX cycle, the periodic TAU cycle, or the periodic registration cycle.

In an implementation method, the NAS message includes a registration accept message, an attach accept message, or a TAU accept message. The message includes the sleep time information. Optionally, the registration accept message further includes one or more of the eDRX cycle, the periodic TAU cycle, or the periodic registration cycle.

Step 708: The terminal device sleeps based on the sleep time information.

The terminal device sleeps in the sleep time period indicated by the sleep time information, and does not execute a service, even if periodic TAU, periodic registration, or transmission on to-be-transmitted uplink data is not performed.

Optionally, after the sleep time period indicated by the sleep time information, the terminal device enters coverage of the satellite network. In this case, the terminal device may sleep based on the eDRX cycle, the periodic TAU cycle, or the periodic registration cycle.

Step 709: When a deregistration timer (or a detach timer) corresponding to the terminal device expires, the mobility management network element determines, based on the sleep time information of the terminal device, whether to perform deregistration (or detachment) on the terminal device.

After the mobility management network element determines that the deregistration timer (or the detach timer) corresponding to the terminal device expires, the mobility management network element determines, based on the sleep time information of the terminal device, whether the terminal device is currently in a sleep time period corresponding to a case in which the terminal device is not covered by the satellite network. If the terminal device is currently in the sleep time period corresponding to a case in which the terminal device is not covered by the satellite network, the mobility management network element determines to skip performing deregistration (or detachment) on the terminal device. If the terminal device is not currently in the sleep time period corresponding to a case in which the terminal device is not covered by the satellite network, the mobility management network element determines to perform deregistration (or detachment) on the terminal device.

Step 709 is an optional step.

In the foregoing embodiment, in a registration process of the terminal device, the mobility management network element determines the sleep time information based on the ephemeris information or the satellite coverage information that corresponds to the satellite cell and that is provided by the access network device, to ensure that the terminal device can sleep as much as possible in the time period in which the terminal device is not covered by the satellite network, and avoid unnecessary network connection operations such as cell selection, to reduce power consumption of the terminal device.

In an implementation method, the embodiment corresponding to FIG. 7 may be applied to a scenario in which the terminal device is not covered by the satellite network for a long time. A new power saving mode is introduced. In other words, in the time period in which the terminal device is not covered by the satellite network, the terminal device always sleeps and does not execute any service, including skipping performing periodic TAU, periodic registration, or uplink data transmission. This can avoid unnecessary and ineffective network connection operations such as cell scanning and cell selection, and reduce power consumption of the terminal device to a maximum extent.

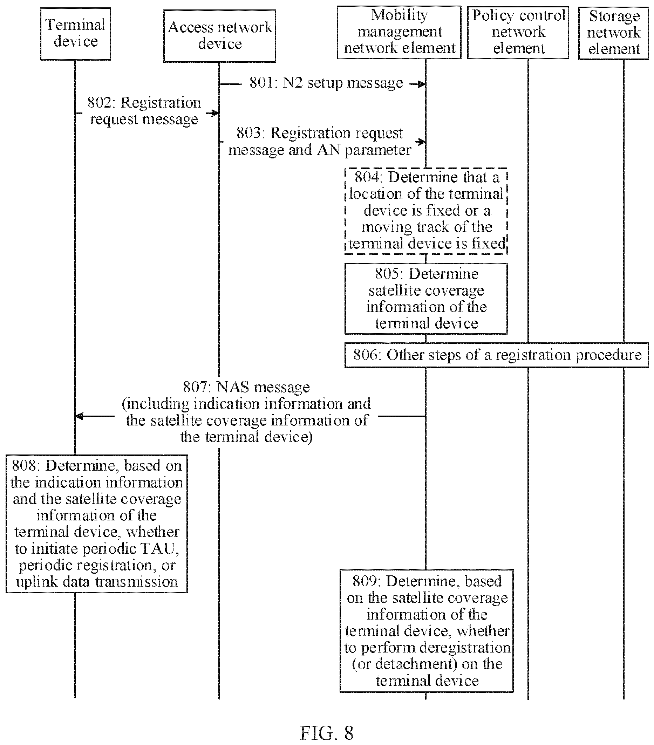

FIG. 8 is a schematic flowchart of a communication method according to an embodiment of this application. This solution is a specific implementation of the embodiment corresponding to FIG. 4.

The method includes the following steps.

Step 801 to step 804 are the same as step 601 to step 604.

Step 804 is an optional step.

Step 805: A mobility management network element determines satellite coverage information of a terminal device.

If the mobility management network element receives, from an access network device, ephemeris information corresponding to a satellite cell in which the terminal device is located, the mobility management network element determines, based on the ephemeris information corresponding to the satellite cell in which the terminal device is located, satellite coverage information corresponding to the satellite cell in which the terminal device is located. The satellite coverage information corresponding to the satellite cell in which the terminal device is located is satellite coverage information of the terminal device.

If the mobility management network element receives, from an access network device, satellite coverage information corresponding to a satellite cell in which the terminal device is located, the satellite coverage information corresponding to the satellite cell in which the terminal device is located is satellite coverage information of the terminal device.

Optionally, the mobility management network element may determine an eDRX cycle, a periodic TAU cycle, or a periodic registration cycle according to an existing method.

Step 806: Other steps of a registration procedure.

Step 807: The mobility management network element sends a NAS message to the terminal device. Correspondingly, the terminal device receives the NAS message.

The NAS message includes indication information and the satellite coverage information of the terminal device. Optionally, the NAS message further includes one or more of the eDRX cycle, the periodic TAU cycle, or the periodic registration cycle. The indication information indicates the terminal device to initiate, based on the satellite coverage information of the terminal device, a periodic TAU procedure, a periodic registration procedure, or uplink data transmission when a periodic TAU timer or a periodic registration timer expires, or there is uplink data transmission.

In an implementation method, the NAS message includes a registration accept message, an attach accept message, or a TAU accept message. The message includes the indication information and the satellite coverage information of the terminal device. Optionally, the message further includes one or more of the eDRX cycle, the periodic TAU cycle, or the periodic registration cycle.

Step 808: The terminal device determines, based on the indication information and the satellite coverage information of the terminal device, whether to initiate periodic TAU, periodic registration, or uplink data transmission.

Specifically, whether the terminal device is covered by a satellite network is determined based on the indication information and the satellite coverage information of the terminal device, that is, whether the terminal device is covered by the satellite network at a current moment. When the terminal device is covered by the satellite network, the terminal device initiates periodic TAU, periodic registration, or uplink data transmission. When the terminal device is not covered by the satellite network, the terminal device does not initiate periodic TAU, periodic registration, or uplink data transmission.

Step 809: The mobility management network element determines, based on the indication information and the satellite coverage information of the terminal device, whether to perform deregistration (or detachment) on the terminal device.

Specifically, when a deregistration timer (or a detach timer) corresponding to the terminal device expires, it is determined, based on the satellite coverage information of the terminal device, whether to perform deregistration (or detachment) on the terminal device. When the terminal device is covered by the satellite network, the mobility management network element performs deregistration (or detachment) on the terminal device. When the terminal device is not covered by the satellite network, the mobility management network element skips performing deregistration (or detachment) on the terminal device.

In the foregoing embodiment, in a registration process, an attach process, or a TAU process of the terminal device, the mobility management network element determines the satellite coverage information of the terminal device, and indicates the terminal device to perform periodic TAU, periodic registration, or uplink data transmission based on the satellite coverage information. This can prevent the terminal device from performing periodic TAU, periodic registration, or uplink data transmission within a time range in which the terminal device is not covered by the satellite network, and can avoid unnecessary network connection operations such as cell scanning and cell selection, to reduce power consumption of the terminal device. In addition, it may also be avoided that the terminal device is deregistered (or detached) by a network side when in the time range in which the terminal device is not covered by the satellite network.

In an implementation method, the embodiment corresponding to FIG. 8 may be applied to a scenario in which the terminal device is not covered by the satellite network for a long time. This is because cycle time of periodic TAU or periodic registration has a limit value, and is not likely to be very large. Therefore, when duration in which the terminal device is not covered by the satellite network is long, periodic TAU or periodic registration inevitably needs to be performed. In this case, the terminal device is not covered by the satellite network, and the terminal device continuously performs cell scanning and cell selection, causing a higher power consumption loss. In addition, because the network side does not receive the periodic TAU or periodic registration from the terminal device, the terminal device is deregistered or detached. Therefore, to avoid unnecessary periodic TAU or periodic registration when the terminal device in an idle state is not covered by the satellite network, in the embodiment corresponding to FIG. 8, when the terminal device is not covered by the satellite network, the terminal device does not perform periodic TAU or periodic registration and uplink data transmission, and the mobility management network element on the network side does not perform deregistration (or detachment) on the terminal device, so that signaling interaction between the terminal device and the mobility management network element can be reduced to a maximum extent, and power consumption of the terminal device is reduced.

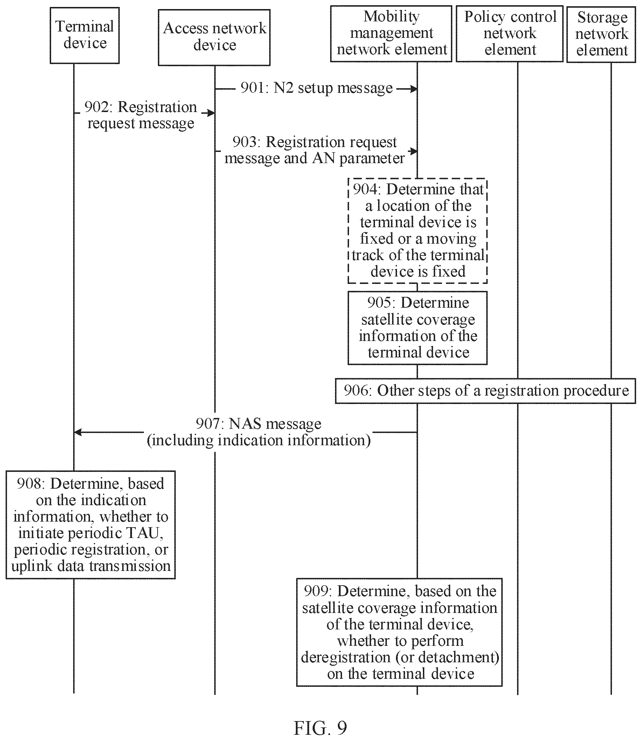

FIG. 9 is a schematic flowchart of a communication method according to an embodiment of this application. This solution is a specific implementation of the embodiment corresponding to FIG. 4.

The method includes the following steps.

Step 901 to step 906 are the same as step 801 to step 806.

Step 907: A mobility management network element sends a NAS message to a terminal device. Correspondingly, the terminal device receives the NAS message.

The NAS message includes indication information. Optionally, the NAS message further includes one or more of an eDRX cycle, a periodic TAU cycle, or a periodic registration cycle. The indication information indicates the terminal device to detect, when a periodic TAU timer or a periodic registration timer expires, or there is uplink data transmission, whether the terminal device is covered by a satellite network.

In an implementation method, the NAS message includes a registration accept message, an attach accept message, or a TAU accept message. The message includes the indication information. Optionally, the registration accept message further includes the eDRX cycle and/or the TAU cycle.

Step 908: The terminal device determines, based on the indication information, whether to initiate periodic TAU, periodic registration, or uplink data transmission.

Specifically, whether the terminal device is covered by the satellite network is determined based on the indication information, that is, whether the terminal device is covered by the satellite network at a current moment. When the terminal device is covered by the satellite network, the terminal device initiates periodic TAU, periodic registration, or uplink data transmission. When the terminal device is not covered by the satellite network, the terminal device does not initiate periodic TAU, periodic registration, or uplink data transmission.

Step 909 is the same as step 809.

In the foregoing embodiment, in a registration process of the terminal device, the mobility management network element indicates the terminal device to perform periodic TAU, periodic registration, or uplink data transmission based on a case whether the terminal device is covered by the satellite network. This can prevent the terminal device from performing periodic TAU, periodic registration, or uplink data transmission within a time range in which the terminal device is not covered by the satellite network, and can avoid unnecessary network connection operations such as cell scanning and cell selection, to reduce power consumption of the terminal device. In addition, it may also be avoided that the terminal device is deregistered (or detached) by a network side when in the time range in which the terminal device is not covered by the satellite network.

In an implementation method, the embodiment corresponding to FIG. 9 may be applied to a scenario in which the terminal device is not covered by the satellite network for a long time. This is because cycle time of periodic TAU or periodic registration has a limit value, and is not likely to be very large. Therefore, when duration in which the terminal device is not covered by the satellite network is long, periodic TAU or periodic registration inevitably needs to be performed. In this case, the terminal device is not covered by the satellite network, and the terminal device continuously performs network connection operations such as cell scanning and cell selection, causing a higher power consumption loss. In addition, because a network side does not receive a periodic TAU request or a periodic registration request from the terminal device, the terminal device is deregistered or detached. Therefore, to avoid unnecessary periodic TAU or periodic registration when the terminal device in an idle state is not covered by the satellite network, in the embodiment corresponding to FIG. 9, when the terminal device is not covered by the satellite network, the terminal device does not perform periodic TAU or periodic registration and uplink data transmission, and the mobility management network element on the network side does not perform deregistration (or detachment) on the terminal device, so that signaling interaction between the terminal device and the mobility management network element can be reduced to a maximum extent, and power consumption of the terminal device is reduced.

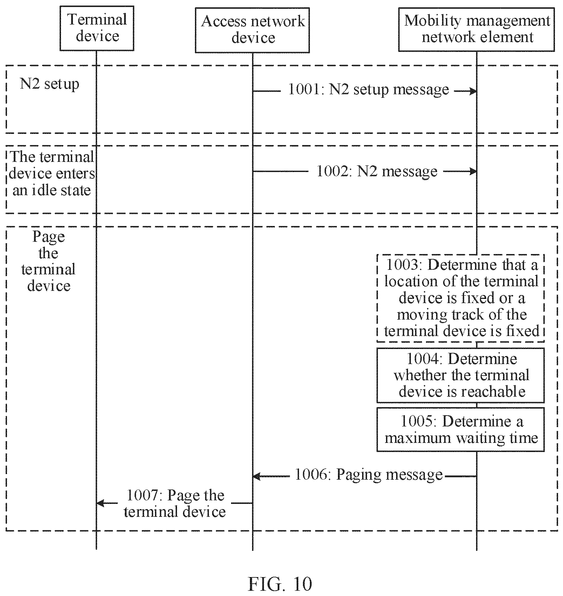

FIG. 10 is a schematic flowchart of a communication method according to an embodiment of this application. This solution is a specific implementation of the embodiment corresponding to FIG. 5.

The method includes the following steps.

Step 1001 is the same as step 601.

Step 1002: An access network device sends an N2 message to a mobility management network element after a terminal device enters an idle state. Correspondingly, the mobility management network element receives the N2 message.

If the N2 setup message in step 1001 does not carry identification information of a satellite cell of the access network device and ephemeris information or satellite coverage information corresponding to each satellite cell, the N2 message may include ephemeris information or satellite coverage information corresponding to a satellite cell in which the terminal device is located. Optionally, the N2 message further includes identification information of the satellite cell in which the terminal device is located. The satellite cell in which the terminal device is located may also be understood as a satellite cell that is last accessed by the terminal device before the terminal device enters the idle state. Specifically, the N2 message may be an N2 release message, and corresponds to an S1 release message in a 4G network.

Step 1003 is the same as step 604.

Step 1003 is an optional step.

Step 1004: The mobility management network element determines whether the terminal device is reachable.

In an implementation method, the mobility management network element determines, based on satellite coverage information of the terminal device, whether the terminal device is reachable. If the terminal device is not currently covered by a satellite network, the terminal device is unreachable. If the terminal device is currently covered by a satellite network, whether the terminal device is reachable is determined based on an existing solution, for example, based on a power saving sleep state of the terminal device. The satellite coverage information of the terminal device is the satellite coverage information of the satellite cell in which the terminal device is located.

In an implementation method, the mobility management network element determines, based on satellite coverage information of the terminal device and an eDRX cycle, a periodic TAU cycle, or a periodic registration cycle, whether the terminal device is reachable. If the terminal device is currently not covered by a satellite network, or the terminal device is in a sleep time of the eDRX cycle, or the terminal device is in a sleep time of the periodic TAU cycle, or the terminal device is in a sleep time of the periodic registration cycle, the terminal device is unreachable. If the terminal device is currently covered by a satellite network, and the terminal device is not in a sleep time of the eDRX cycle, the terminal device is not in a sleep time of the periodic TAU cycle, and the terminal device is not in a sleep time of the periodic registration cycle, the terminal device is reachable. It should be understood that the sleep time in the periodic TAU cycle or the periodic registration cycle is a sleep time period in which the terminal device enters a sleep state after a time period after the terminal device enters an idle state from a connected state, for example, a power saving mode (Power Saving Mode, PSM) in a 4G network or an uplink-only connection (Mobile Initiated Connection Only, MICO) mode in a 5G network.

Step 1005: If the terminal device is unreachable, the mobility management network element determines a maximum waiting time based on the satellite coverage information of the terminal device.

For a specific implementation of this step, refer to the descriptions of step 502.

Step 1006: When the terminal device enters a reachable state, the mobility management network element sends a paging message to the access network device. Correspondingly, the access network device receives the paging message.

The paging message includes identification information of the terminal device and identification information of a paging cell.

The paging cell may be a cell last accessed by the terminal device, or may be all cells in a tracking area in which a cell last accessed by the terminal device is located.

Step 1007: The access network device pages the terminal device.

According to the foregoing solutions, the mobility management network element may determine reachability based on the satellite coverage information of the terminal device. If the terminal device is unreachable, the mobility management network element determines the maximum waiting time based on the satellite coverage information, to ensure that when the terminal device is not covered by the satellite network, the terminal device is not paged and downlink data is not sent to the terminal device. This reduces power consumption of the mobility management network element and reduces a data loss.

In an implementation method, if the mobility management network element in this solution is an MME in 4G, before step 1004, the MME may further receive a downlink data arrival notification from a user plane network element, and the downlink data arrival notification triggers the MME to perform step 1004. In addition, after step 1005, the MME further determines downlink data buffer expiration duration based on the maximum waiting time or a downlink buffer time, to indicate whether data of the terminal device is currently buffered on a core network side. After the downlink data buffer expiration duration expires, the MME determines that there is no downlink buffer data of the terminal device currently.

In an implementation method, if the mobility management network element in this solution is an AMF network element in 5G, before step 1004, the AMF network element may further receive a downlink data arrival notification from an SMF network element, and the downlink data arrival notification triggers the AMF network element to perform step 1004. In addition, after step 1005, the AMF network element further indicates, based on the maximum waiting time, the SMF network element and/or a user plane network element to buffer data. Then, the SMF network element may determine an extended buffer time based on the maximum waiting time. The extended buffer time indicates specific duration for which the user plane network element buffers downlink data. After the extended buffer time arrives and the buffered data is still not sent to the terminal device, the SMF network element discards the corresponding buffered data.

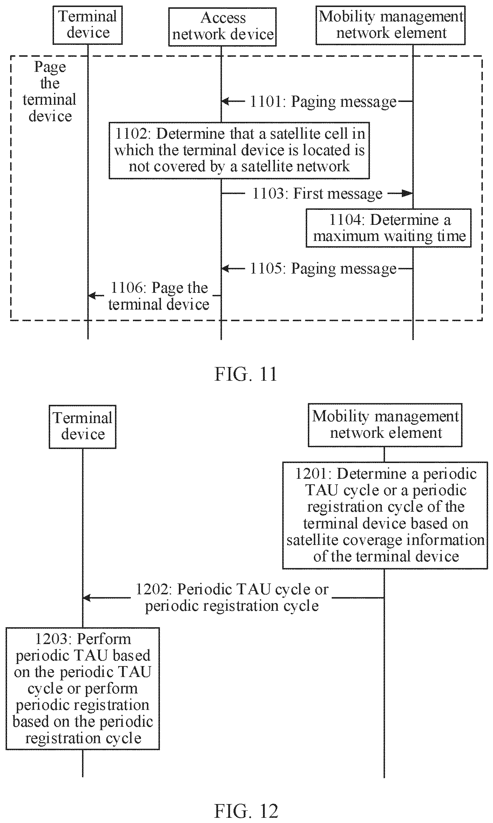

FIG. 11 is a schematic flowchart of a communication method according to an embodiment of this application. This solution is a specific implementation of the embodiment corresponding to FIG. 5.

The method includes the following steps.

Step 1101: A mobility management network element sends a paging message to an access network device. Correspondingly, the access network device receives the paging message.

The paging message includes identification information of a terminal device and identification information of a paging cell.

The paging cell may be a cell last accessed by the terminal device, or may be all cells in a tracking area in which a cell last accessed by the terminal device is located.

Step 1102: The access network device determines that a satellite cell in which the terminal device is located is not covered by a satellite network.

In an implementation method, the access network device determines, based on satellite coverage information of the terminal device, whether the terminal device is covered by the satellite network. If the terminal device is not currently covered by the satellite network, the paging fails. If the terminal device is currently covered by a satellite network, the terminal device is paged. The satellite coverage information of the terminal device is satellite coverage information of the satellite cell in which the terminal device is located.

Step 1103: The access network device sends a first message to the mobility management network element. Correspondingly, the mobility management network element receives the first message.

Specifically, the first message may be an N2 message or a paging failure message.

The access network device determines that the terminal device is not currently covered by the satellite network. Therefore, the access network device sends the first message to the mobility management network element. The first message includes a paging failure indication and the satellite coverage information of the terminal device. The paging failure indication indicates that a reason for this paging failure is that the terminal device is not covered by the satellite network. Optionally, the paging failure indication further indicates that the mobility management network element needs to perform reachability determining/paging based on the satellite coverage information.

In another implementation method, the access network device determines that the terminal device is not currently covered by the satellite network. Therefore, the access network device sends the first message to the mobility management network element. The first message includes the satellite coverage information of the terminal device. The satellite coverage information indicates that a reason for this paging failure is that the terminal device is not covered by the satellite network. Optionally, the satellite coverage information further indicates that the mobility management network element needs to perform reachability determining/paging based on the satellite coverage information.

Step 1104: The mobility management network element determines a maximum waiting time based on the satellite coverage information of the terminal device.

For a specific implementation of this step, refer to the descriptions of step 502.

Step 1105 and step 1106 are the same as step 1006 and step 1007.

According to the foregoing solution, when the mobility management network element notifies the access network device to page the terminal device, the access network device determines, based on the satellite coverage information of the terminal device, whether the terminal device can be paged currently. If the terminal device is not within coverage of the satellite network, the access network device notifies the mobility management network element that the paging fails and sends the satellite coverage information of the terminal device to the mobility management network element, so that the mobility management network element determines the maximum waiting time based on the satellite coverage information, to ensure that the terminal device is not paged when the terminal device is not covered by the satellite network. This can reduce unnecessary signaling interaction between the mobility management network element and the access network device, and avoid a waste of paging resources of the access network device and a loss of downlink data of the terminal device.

In an implementation method, if the mobility management network element in this solution is an MME in 4G, before step 1101, the MME may further receive a downlink data arrival notification from a user plane network element, and the downlink data arrival notification triggers the MME to perform step 1101. In addition, after step 1104, the MME further determines downlink data buffer expiration duration based on the maximum waiting time, that is, a downlink buffer time, to indicate whether data of the terminal device is currently buffered on a core network side. After the downlink data buffer expiration duration expires, the MME determines that there is no downlink buffer data of the terminal device currently.

In an implementation method, if the mobility management network element in this solution is an AMF network element in 5G, before step 1101, the AMF network element may further receive a downlink data arrival notification from an SMF network element, and the downlink data arrival notification triggers the AMF network element to perform step 1101. In addition, after step 1104, the AMF network element further indicates, based on the maximum waiting time, the SMF network element and/or a user plane network element to buffer data. Then, the SMF network element may determine an extended buffer time based on the maximum waiting time. The extended buffer time indicates specific duration for which the user plane network element buffers downlink data. After the extended buffer time arrives and the buffered data is still not sent to the terminal device, the SMF network element discards the corresponding buffered data.

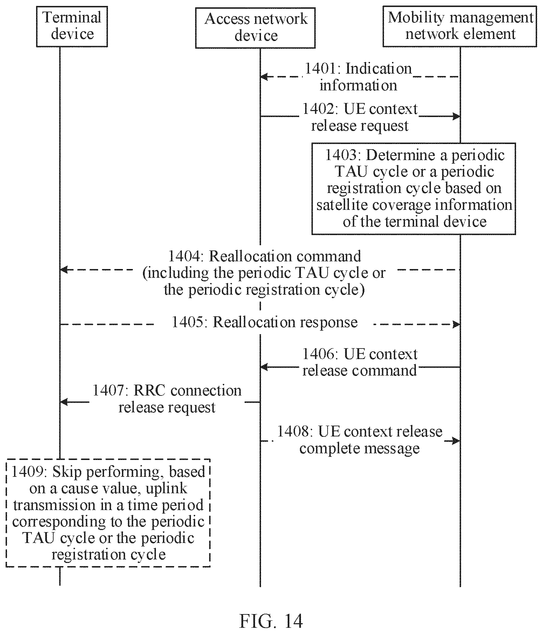

In an embodiment corresponding to FIG. 12 and an embodiment corresponding to FIG. 14, an example in which a mobility management network element determines a proper periodic TAU cycle or periodic registration cycle, so that a terminal device skips performing, based on the periodic TAU cycle or the periodic registration cycle, uplink signaling or uplink data transmission in a time period in which the terminal device is not covered by a satellite network is used for description. In actual application, the mobility management network element may also determine another parameter (for example, a service gap (service gap) or eDRX), so that the terminal device skips performing, based on the another parameter, uplink signaling or uplink data transmission in the time period in which the terminal device is not covered by the satellite network. It may be understood that the "periodic TAU cycle" and the "periodic registration cycle" in the embodiment corresponding to FIG. 12 and the embodiment corresponding to FIG. 14 may be replaced with another parameter (such as a service gap or eDRX). For a definition of the service gap, refer to TS23.401 V17.2.0. The "another parameter" may be a parameter indicating duration.

FIG. 12 is a schematic flowchart of a communication method according to an embodiment of this application. For example, in a 4G application scenario, a mobility management network element and an access network device may be an MME and an eNB respectively. For example, in a 5G application scenario, a mobility management network element and an access network device may be an AMF and a gNB respectively. A terminal device in this embodiment is a terminal device of a satellite access type.

The method includes the following steps.

Step 1201: The mobility management network element determines a periodic TAU cycle or a periodic registration cycle based on satellite coverage information of the terminal device.

Optionally, a location of the terminal device is fixed or a moving track of the terminal device is fixed.

For a meaning of the satellite coverage information, refer to the foregoing descriptions. Details are not described herein again.

Optionally, when determining that the terminal device is the terminal device of the satellite access type, the mobility management network element may determine the periodic TAU cycle or the periodic registration cycle based on the satellite coverage information of the terminal device.

In 4G, the mobility management network element is the MME, and the MME determines the periodic TAU cycle. In specific implementation, the periodic TAU cycle may be represented by a periodic TAU timer. In 5G, the mobility management network element is the AMF, and the AMF determines the periodic registration cycle. In specific implementation, the periodic registration cycle may be represented by a periodic registration timer.

A time period corresponding to the periodic TAU cycle includes a time period in which the terminal device is not covered by a satellite network, or a time period corresponding to the periodic registration cycle includes a time period in which the terminal device is not covered by a satellite network, to ensure that when the terminal device is not covered by the satellite network, the terminal device skips executing a periodic TAU procedure or a periodic registration procedure, and the terminal device remains in a sleep state, in other words, a time period from a moment at which the terminal device enters an idle state to a moment before the periodic TAU timer or the periodic registration timer expires includes the time period in which the terminal device is not covered by the satellite network.

The following describes different implementation methods for triggering the mobility management network element to perform step 1201.

Method 1: The mobility management network element determines, based on the satellite coverage information of the terminal device, that the terminal device is about to be out of satellite network coverage, and sends indication information to the access network device. The indication information indicates the access network device to execute a terminal device connection release procedure. Then, the access network device sends a UE context release request to the mobility management network element. The UE context release request is used to request the mobility management network element to release a context of the terminal device. After receiving the UE context release request, the mobility management network element is triggered to perform step 1201.

Method 2: The access network device determines, based on the satellite coverage information of the terminal device, that the terminal device is about to be out of satellite network coverage, and triggers the access network device to send a context release request to the mobility management network element. The context release request is used to request the mobility management network element to release a context of the terminal device. After receiving the UE context release request, the mobility management network element is triggered to perform step 1201.

Method 3: The terminal device determines, based on the satellite coverage information of the terminal device, that the terminal device is about to be out of satellite network coverage, and sends a TAU request or a mobility registration update request to the mobility management network element. After receiving the TAU request or the mobility registration update request, the mobility management network element is triggered to perform step 1201.

Optionally, the mobility management network element further determines first duration based on the satellite coverage information of the terminal device. The first duration is duration after the terminal device enters the idle state and before the terminal device enters the sleep state. The first duration may also be referred to as duration (active time) in which the terminal device is in an active state. When the terminal device is in the active state, the network may call the terminal device from the idle state to a connected state through paging.

Step 1202: The mobility management network element sends the periodic TAU cycle or the periodic registration cycle to the terminal device.

In 4G, the mobility management network element, for example, the MME, sends the periodic TAU cycle to the terminal device. Optionally, the MME sends a GUTI reallocation command (GUTI Reallocation Command) to the terminal device, where the GUTI reallocation command carries the periodic TAU cycle. Alternatively, the MME sends a TAU accept message to the terminal device, where the TAU accept message carries the periodic TAU cycle.

In 5G, the mobility management network element, for example, the AMF, sends the periodic registration cycle to the terminal device. Optionally, the AMF sends a configuration update command (UE Configuration Update Command) to the terminal device, where the UE configuration update command carries the periodic registration cycle. Alternatively, the AMF sends a mobility registration update accept message to the terminal device, where the mobility registration update accept message carries the periodic registration cycle.

In an implementation method, the mobility management network element sends the periodic TAU cycle or the periodic registration cycle to the terminal device by using the access network device. In other words, the mobility management network element sends the periodic TAU cycle or the periodic registration cycle to the access network device, and then the access network device sends the periodic TAU cycle or the periodic registration cycle to the terminal device.

Optionally, the mobility management network element may further send first duration to the terminal device. The first duration is duration after the terminal device enters the idle state and before the terminal device enters the sleep state. The first duration may also be referred to as duration (active time) in which the terminal device is in an active state. When the terminal device is in the active state, the network may call the terminal device from the idle state to a connected state through paging.

Optionally, the mobility management network element may further send a cause value to the terminal device, where the cause value is discontinuous satellite coverage, or the cause value indicates that the terminal device skips performing uplink transmission during sleep.

Step 1203: The terminal device performs periodic TAU based on the periodic TAU cycle, or performs periodic registration based on the periodic registration cycle.

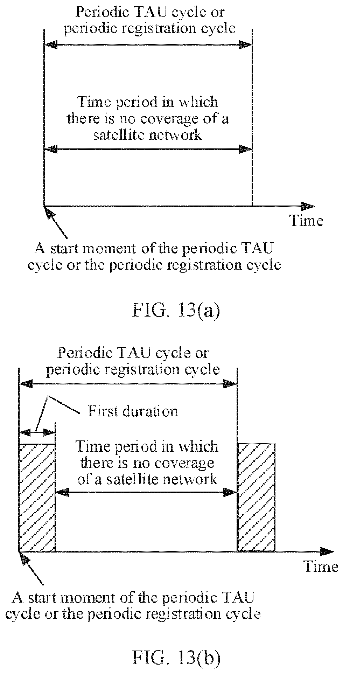

FIG. 13(a) is a schematic diagram of the periodic TAU cycle or the periodic registration cycle according to an embodiment of this application. A start moment of the periodic TAU cycle (that is, the periodic TAU timer) or the periodic registration cycle (that is, the periodic registration timer) may be a moment at which the terminal device enters the idle state. A time period corresponding to the periodic TAU cycle or a time period corresponding to the periodic registration cycle includes the time period in which the terminal device is not covered by the satellite network. The terminal device enters the sleep state in the time period in which the terminal device is not covered by the satellite network.

FIG. 13(b) is another schematic diagram of the periodic TAU cycle or the periodic registration cycle according to an embodiment of this application. A start moment of the periodic TAU cycle (that is, the periodic TAU timer) or the periodic registration cycle (that is, the periodic registration timer) may be a moment at which the terminal device enters the idle state. A time period corresponding to the periodic TAU cycle or a time period corresponding to the periodic registration cycle includes the time period in which the terminal device is not covered by the satellite network. The time period corresponding to the periodic TAU cycle or the time period corresponding to the periodic registration cycle further includes the first duration, and the terminal device may be woken up by a network side through paging within the first duration, to enter the connected mode. The terminal device enters the sleep state in the time period in which the terminal device is not covered by the satellite network.

Optionally, if the terminal device receives the cause value, and the cause value indicates that the terminal device skips performing uplink transmission during sleep, when there is an uplink transmission requirement, the terminal device skips performing, based on the cause value, uplink transmission in the time period corresponding to the periodic TAU cycle or the periodic registration cycle.

According to the foregoing solution, the mobility management network element determines the periodic TAU cycle or the periodic registration cycle based on the satellite coverage information of the terminal device, so that the time period corresponding to the periodic TAU cycle or the time period corresponding to the periodic registration cycle includes the time period in which the terminal device is not covered by the satellite network, to ensure that the terminal device can avoid executing, as much as possible, the periodic TAU procedure or the periodic registration procedure in the time period in which the terminal device is not covered by the satellite network, thereby avoiding unnecessary network connection operations such as cell selection, and reducing power consumption of the terminal device.

FIG. 14 is a schematic flowchart of a communication method according to an embodiment of this application. This solution is a specific implementation of the embodiment corresponding to FIG. 12. For example, in a 4G application scenario, a mobility management network element and an access network device may be an MME and an eNB respectively. For example, in a 5G application scenario, a mobility management network element and an access network device may be an AMF and a gNB respectively. A terminal device in this embodiment is a terminal device of a satellite access type.

The method includes the following steps.

Step 1401: The mobility management network element determines, based on satellite coverage information of the terminal device, that the terminal device is about to be out of satellite network coverage, and sends indication information to the access network device. Correspondingly, the access network device receives the indication information.

Optionally, a location of the terminal device is fixed or a moving track of the terminal device is fixed.

In an implementation method, the mobility management network element may receive the satellite coverage information of the terminal device from the access network device, a third party, or the terminal device. In another implementation method, the mobility management network element may receive ephemeris information of a cell from the access network device, a third party, or the terminal device, and then determine the satellite coverage information of the terminal device based on the ephemeris information of the cell.

The indication information indicates the access network device to execute a procedure of releasing the terminal device. In 4G, the procedure of releasing the terminal device is an S1 release procedure. In 5G, the procedure of releasing the terminal device is a procedure of releasing an access network (access network, AN).

Step 1401 is an optional step.

Step 1402: The access network device sends a UE context release request to the mobility management network element. Correspondingly, the mobility management network element receives the UE context release request.

The UE context release request is used to request the mobility management network element to release a UE context, so that the mobility management network element may release a connection to the terminal device, to enable the terminal device to enter an idle state.

In an implementation method, if step 1401 is performed, the indication information triggers the access network device to perform step 1402.

In another implementation method, if step 1401 is not performed, the access network device may determine, based on the satellite coverage information of the terminal device, that the terminal device is about to be out of satellite network coverage, and then trigger the access network device to perform step 1402.

In another implementation method, if step 1401 is not performed, the access network device may trigger the access network device based on another reason to perform step 1402. The another reason herein includes but is not limited to: no service being executed in the terminal device, operator's operation and maintenance system intervention (O&M Intervention), or an unspecified failure (Unspecified Failure).

Optionally, in 4G, after receiving the UE context release request, the mobility management network element (that is, the MME) may further request a serving gateway (serving gateway, S-GW) to release a bearer resource. Optionally, in 5G, after receiving the UE context release request, the mobility management network element (that is, the AMF) may further request the SMF to release a bearer resource.

Step 1403: The mobility management network element determines a periodic TAU cycle or a periodic registration cycle based on the satellite coverage information of the terminal device.

Optionally, when determining that the terminal device is the terminal device of the satellite access type, the mobility management network element may determine the periodic TAU cycle or the periodic registration cycle based on the satellite coverage information of the terminal device.

In 4G, the mobility management network element is the MME, and the MME determines the periodic TAU cycle. In specific implementation, the periodic TAU cycle may be represented by a periodic TAU timer. In 5G, the mobility management network element is the AMF, and the AMF determines the periodic registration cycle. In specific implementation, the periodic registration cycle may be represented by a periodic registration timer.

A time period corresponding to the periodic TAU cycle includes a time period in which the terminal device is not covered by a satellite network, or a time period corresponding to the periodic registration cycle includes a time period in which the terminal device is not covered by a satellite network, to ensure that when the terminal device is not covered by the satellite network, the terminal device skips executing a periodic TAU procedure or a periodic registration procedure, and the terminal device remains in a sleep state, in other words, a time period from a moment at which the terminal device enters an idle state to a moment before the periodic TAU timer or the periodic registration timer expires includes the time period in which the terminal device is not covered by the satellite network.

Optionally, the mobility management network element further determines first duration. The first duration is duration after the terminal device enters the idle state and before the terminal device enters the sleep state. The first duration may also be referred to as duration (active time) in which the terminal device is in an active state. When the terminal device is in the active state, the network may call the terminal device from the idle state to a connected state through paging.

Step 1404: The mobility management network element sends a reallocation command to the terminal device, where the reallocation command includes the periodic TAU cycle or the periodic registration cycle. Correspondingly, the terminal device receives the reallocation command.

Optionally, the reallocation command further includes the duration in which the terminal device is in the active state.

Optionally, the reallocation command further includes a cause value, and the cause value is discontinuous satellite coverage. Optionally, the cause value further indicates that the terminal device skips performing uplink transmission during sleep. The uplink transmission herein includes uplink service data transmission and/or uplink signaling transmission.

Step 1405: The terminal device sends a reallocation response to the mobility management network element. Correspondingly, the mobility management network element receives the reallocation response.

In 4G, the reallocation command may be a GUTI reallocation command. The GUTI reallocation command includes the periodic TAU cycle, and optionally further includes the first duration and/or the cause value. The reallocation response may be a GUTI reallocation complete message.

In 4G, the reallocation command may be a UE configuration update command, and the UE configuration update command includes the periodic registration cycle, and optionally further includes the first duration and/or the cause value. The reallocation response may be a UE configuration update complete message.

Step 1404 and step 1405 are optional steps.

Step 1406: The mobility management network element sends a UE context release command to the access network device. Correspondingly, the access network device receives the UE context release command.

The UE context release command indicates the access network device to release a UE context.

If step 1404 and step 1405 are not performed, the UE context release command includes the periodic TAU cycle or the periodic registration cycle, and optionally further includes the first duration and/or the cause value.

Step 1407: The access network device sends an RRC connection release request to the terminal device. Correspondingly, the terminal device receives the RRC connection release request.

If the UE context release command includes the periodic TAU cycle or the periodic registration cycle, the RRC connection release request includes the periodic TAU cycle or the periodic registration cycle. If the UE context release command further includes the first duration and/or the cause value, the RRC connection release request further includes the first duration and/or the cause value.

Step 1408: The access network device sends a UE context release complete message to the mobility management network element. Correspondingly, the mobility management network element receives the UE context release complete message.

Step 1408 is an optional step.

Step 1409: The terminal device skips performing, based on the cause value, uplink transmission in the time period corresponding to the periodic TAU cycle or the periodic registration cycle.

In other words, when there is an uplink transmission requirement, the terminal device skips performing, based on the cause value, uplink transmission in the time period corresponding to the periodic TAU cycle or the periodic registration cycle.

Step 1409 is an optional step.

When step 1404 or step 1407 includes the cause value, step 1409 is performed.

According to the foregoing solution, in the procedure of releasing the terminal device, when the terminal device enters the idle state, update of the periodic TAU cycle or the periodic registration cycle is triggered, to ensure that after entering the idle state, the terminal device sleeps in a time period in which the terminal device is not covered by the satellite network, to reduce power consumption of the terminal device.

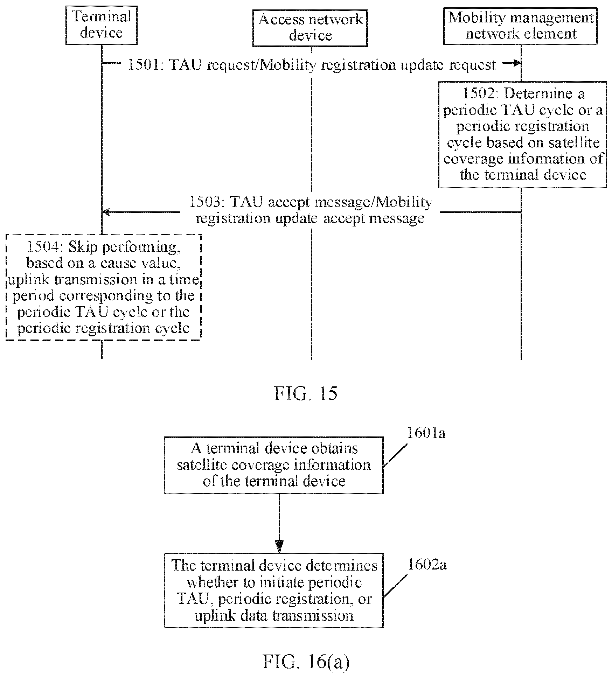

FIG. 15 is a schematic flowchart of a communication method according to an embodiment of this application. This solution is a specific implementation of the embodiment corresponding to FIG. 12. For example, in a 4G application scenario, a mobility management network element and an access network device may be an MME and an eNB respectively. For example, in a 5G application scenario, a mobility management network element and an access network device may be an AMF and a gNB respectively.

The method includes the following steps.

Step 1501: A terminal device determines, based on satellite coverage information of the terminal device, that the terminal device is about to be out of satellite network coverage, and sends a TAU request or a mobility registration update (Mobility Registration Update) request to the mobility management network element by using the access network device. Correspondingly, the mobility management network element receives the TAU request or the mobility registration update request.

Optionally, a location of the terminal device is fixed or a moving track of the terminal device is fixed.

In an implementation method, the terminal device may receive the satellite coverage information of the terminal device from the access network device, a third party, or a core network device. In another implementation method, the terminal device may receive ephemeris information of a cell from the access network device, a third party, or a core network device, and then determine the satellite coverage information of the terminal device based on the ephemeris information of the cell.

In 4G, the access network device sends the TAU request to the mobility management network element (that is, the MME). In 5G, the access network device sends the mobility registration update request to the mobility management network element (that is, the AMF).

Step 1502 is the same as step 1403.

Step 1503: The mobility management network element sends a TAU accept message or a mobility registration update accept message to the terminal device by using the access network device, where the TAU accept message includes a periodic TAU cycle, or the mobility registration update accept message includes a periodic registration cycle. Correspondingly, the terminal device receives the TAU accept message or the mobility registration update accept message.

In 4G, the access network device sends the TAU request to the mobility management network element (that is, the MME). Correspondingly, the MME sends the TAU accept message to the access network device. In 5G, the access network device sends the mobility registration update request to the mobility management network element (that is, the AMF). Correspondingly, the AMF sends the mobility registration update accept message to the access network device.

Optionally, the TAU accept message or the mobility registration update accept message further includes first duration. For a meaning of the first duration, refer to the descriptions in step 1403.

Optionally, the TAU accept message or the mobility registration update accept message further includes a cause value. For a meaning of the cause value, refer to the descriptions in step 1403.

Step 1504: The terminal device skips performing, based on the cause value, uplink transmission in the time period corresponding to the periodic TAU cycle or the periodic registration cycle.

In other words, when there is an uplink transmission requirement, the terminal device skips performing, based on the cause value, uplink transmission in a time period corresponding to the periodic TAU cycle or the periodic registration cycle.

Step 1504 is an optional step. When step 1503 includes the cause value, step 1504 is performed.

According to the foregoing solution, before the terminal device is about to be out of satellite network coverage, the terminal device triggers a periodic TAU procedure or a periodic registration procedure, so that the mobility management network element determines the periodic TAU cycle or the periodic registration cycle based on the satellite coverage information of the terminal device. The time period corresponding to the periodic TAU cycle or the periodic registration cycle includes a time period in which the terminal device is not covered by a satellite network, to ensure that after entering an idle state, the terminal device sleeps in the time period in which the terminal device is not covered by the satellite network, thereby reducing power consumption of the terminal device.

FIG. 16(a) is a schematic flowchart of a communication method according to an embodiment of this application. This solution is a specific implementation of the embodiment corresponding to FIG. 4. The method includes the following steps.

Step 1601a: A terminal device obtains satellite coverage information of the terminal device.

Optionally, a location of the terminal device is fixed or a moving track of the terminal device is fixed.

In an implementation method, the terminal device may receive the satellite coverage information of the terminal device from an access network device, a third party, or a core network device (for example, a mobility management network element). In another implementation method, the terminal device may receive ephemeris information from an access network device, a third party, or a core network device, and then determine the satellite coverage information of the terminal device based on the ephemeris information.

That the terminal device receives the satellite coverage information of the terminal device or the ephemeris information from the access network device may be implemented by using the following method: The terminal device receives an RRC message from the access network device, where the RRC message includes the satellite coverage information of the terminal device or the ephemeris information. The RRC message may be an RRC reconfiguration message or a broadcast message.

That the terminal device receives the satellite coverage information of the terminal device or the ephemeris information from the mobility management network element may be implemented by using the following method: The terminal device receives a NAS message from the mobility management network element, where the NAS message includes the satellite coverage information of the terminal device or the ephemeris information. Optionally, the NAS message further includes one or more of an eDRX cycle, a periodic TAU cycle, or a periodic registration cycle. The NAS message may be a registration accept message, an attach accept message, or a TAU accept message.

The satellite coverage information of the terminal device may be the ephemeris information.

Step 1602a: The terminal device determines, based on the satellite coverage information of the terminal device, whether to initiate periodic TAU, periodic registration, or uplink data transmission.

Specifically, the terminal device determines, based on the satellite coverage information of the terminal device, whether the terminal device is covered by a satellite network, that is, whether the terminal device is covered by the satellite network at a current moment. When the terminal device is covered by the satellite network, the terminal device initiates periodic TAU, periodic registration, or uplink data transmission. When the terminal device is not covered by the satellite network, the terminal device does not initiate periodic TAU, periodic registration, or uplink data transmission.

In an implementation method, the terminal device may further receive indication information from the access network device or the mobility management network element. The indication information indicates the terminal device to check a satellite network coverage status when the terminal device has an uplink transmission requirement, and perform uplink transmission based on the satellite network coverage status. The uplink transmission requirement herein includes but is not limited to one or more of periodic TAU, periodic registration, or uplink data transmission. When the terminal device receives the indication information, step 1602a may be: The terminal device determines, based on the satellite coverage information of the terminal device and the indication information, whether to initiate periodic TAU, periodic registration, or uplink data transmission. When the terminal device is covered by the satellite network, the terminal device initiates periodic TAU, periodic registration, or uplink data transmission. When the terminal device is not covered by the satellite network, the terminal device does not initiate periodic TAU, periodic registration, or uplink data transmission.

According to the foregoing solution, when the terminal device is not covered by the satellite network, even if there is an uplink transmission requirement, the terminal device skips performing uplink transmission, so that unnecessary and ineffective network connection operations such as cell scanning and cell selection can be avoided, thereby reducing power consumption of the terminal device.

Optionally, the embodiment corresponding to FIG. 16(a) may be applied to a scenario in which the terminal device is not covered by the satellite network for a long time. This is because cycle time of periodic TAU or periodic registration has a limit value, and is not likely to be very large. Therefore, when duration in which the terminal device is not covered by the satellite network is long, periodic TAU or periodic registration inevitably needs to be performed. In this case, the terminal device is not covered by the satellite network, and the terminal device continuously performs cell scanning and cell selection, causing a higher power consumption loss. Therefore, to avoid unnecessary periodic TAU or periodic registration when the terminal device in an idle state is not covered by the satellite network, in the embodiment corresponding to FIG. 16(a), when the terminal device is not covered by the satellite network, the terminal device does not perform periodic TAU or periodic registration and uplink data transmission, so that signaling interaction between the terminal device and the mobility management network element can be reduced to a maximum extent, and power consumption of the terminal device is reduced.

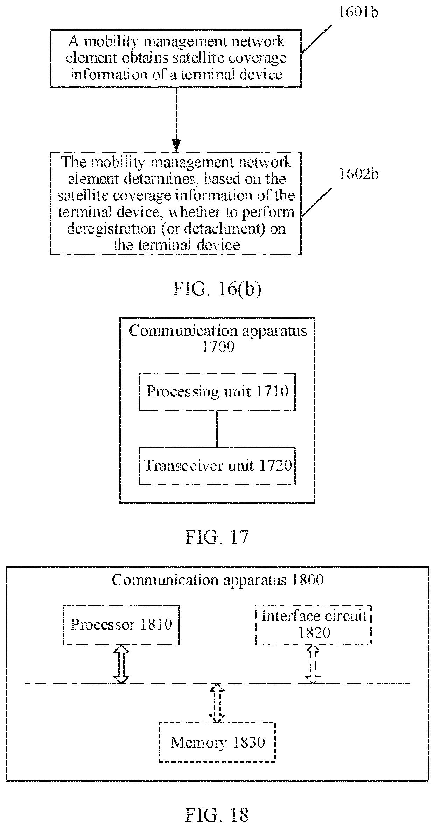

FIG. 16(b) is a schematic flowchart of a communication method according to an embodiment of this application. This solution is a specific implementation of the embodiment corresponding to FIG. 4. The method includes the following steps.

Step 1601b: A mobility management network element obtains satellite coverage information of a terminal device.

In an implementation method, the mobility management network element may receive the satellite coverage information of the terminal device from the terminal device, an access network device, or a third party, where the satellite coverage information of the terminal device may also be ephemeris information.

In another implementation method, the mobility management network element may receive ephemeris information from the terminal device, an access network device, or a third party, and then determine the satellite coverage information of the terminal device based on the ephemeris information.

Step 1602b: The mobility management network element determines, based on the satellite coverage information of the terminal device, whether to perform deregistration (or detachment) on the terminal device.

Specifically, when a deregistration timer (or a detach timer) corresponding to the terminal device expires, it is determined, based on the satellite coverage information of the terminal device, whether to perform deregistration (or detachment) on the terminal device. When the terminal device is covered by the satellite network, the mobility management network element performs deregistration (or detachment) on the terminal device. When the terminal device is not covered by a satellite network, the mobility management network element skips performing deregistration (or detachment) on the terminal device.

Skipping performing deregistration on the terminal device may also be understood as keeping a registration state of the terminal device unchanged. Skipping performing detachment on the terminal device may also be understood as keeping an attachment state of the terminal device unchanged, that is, keeping the terminal device always in an EMM-registered state. Optionally, a case in which the terminal device is not deregistered is in response to a case in which the terminal device is not covered by the satellite network.

According to the foregoing solutions, because switching of the status of the terminal device back and forth between registration and deregistration or between attachment and detachment is reduced, signaling interaction between the terminal device and a network can be reduced, and power consumption of the terminal device can be reduced.

In an implementation method, the embodiment corresponding to FIG. 16(a) and the embodiment corresponding to FIG. 16(b) may be combined for implementation.

It may be understood that, to implement functions in the foregoing embodiments, the mobility management network element, the access network device, or the terminal device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

FIG. 17 and FIG. 18 each are a schematic diagram of a structure of a possible communication apparatus according to an embodiment of this application. These communication apparatuses may be configured to implement a function of the mobility management network element, the access network device, or the terminal device in the foregoing method embodiments, and therefore can also achieve beneficial effects of the foregoing method embodiments. In embodiments of this application, the communication apparatus may be the mobility management network element, the access network device, or the terminal device, or may be a module (for example, a chip) applied to the mobility management network element, the access network device, or the terminal device.

As shown in FIG. 17, the communication apparatus 1700 includes a processing unit 1710 and a transceiver unit 1720. The communication apparatus 1700 is configured to implement the function of the mobility management network element, the access network device, or the terminal device in the foregoing method embodiments.

In a first embodiment, the communication apparatus is configured to perform operations of the mobility management network element. The processing unit 1710 is configured to determine sleep time information of a terminal device based on satellite coverage information of the terminal device, where the satellite coverage information indicates a time period in which the terminal device is covered by a satellite network and/or indicates a time period in which the terminal device is not covered by the satellite network, and a sleep time period corresponding to the sleep time information includes the time period in which the terminal device is not covered by the satellite network. The transceiver unit 1720 is configured to send the sleep time information to the terminal device.

In a possible implementation method, the processing unit 1710 is configured to determine one or more of an eDRX cycle, a periodic TAU cycle, or a periodic registration cycle of the terminal device based on the satellite coverage information. The sleep time information includes a sleep start time, and the sleep start time is within the eDRX cycle, the periodic TAU cycle, or the periodic registration cycle.

In a possible implementation method, the sleep time information includes a sleep start time and a sleep end time; or the sleep time information includes a sleep start time and sleep duration.

In a possible implementation method, the processing unit 1710 is configured to receive the satellite coverage information by using the transceiver unit 1720. Alternatively, the transceiver unit 1720 receives ephemeris information of a satellite cell in which the terminal device is located, and determine the satellite coverage information based on the ephemeris information.

In a possible implementation method, the processing unit 1710 is configured to determine that a location of the terminal device is fixed or a moving track of the terminal device is fixed.

In a possible implementation method, the processing unit 1710 is configured to: when a deregistration timer corresponding to the terminal device expires, determine, based on the satellite coverage information, that the terminal device is not covered by the satellite network, and determine to skip performing deregistration on the terminal device.

In a second embodiment, the communication apparatus is configured to perform operations of the mobility management network element. The processing unit 1710 is configured to: when a deregistration timer corresponding to a terminal device expires, determine, based on satellite coverage information of the terminal device, that the terminal device is not covered by a satellite network, where the satellite coverage information indicates a time period in which the terminal device is covered by the satellite network and/or a time period in which the terminal device is not covered by the satellite network; and in response to a case in which the terminal device is not covered by the satellite network, determine to skip performing deregistration or detachment on the terminal device.

In a possible implementation method, the transceiver unit 1720 is configured to send first information to the terminal device, where the first information indicates that the terminal device performs uplink transmission based on a satellite network coverage status when the terminal device has an uplink transmission requirement.

In a possible implementation method, the first information is the satellite coverage information, and the first information specifically indicates that the terminal device initiates uplink transmission based on the satellite coverage information when the terminal device has the uplink transmission requirement.

In a possible implementation method, the transceiver unit 1720 is configured to send the satellite coverage information to the terminal device, where the first information specifically indicates that the terminal device initiates uplink transmission based on the satellite coverage information when the terminal device has the uplink transmission requirement.

In a possible implementation method, the uplink transmission requirement includes one or more of periodic TAU, periodic registration, or uplink data transmission.

In a possible implementation method, the processing unit 1710 is configured to receive the satellite coverage information by using the transceiver unit 1720. Alternatively, the transceiver unit 1720 receives ephemeris information of a satellite cell in which the terminal device is located, and determine the satellite coverage information based on the ephemeris information.

In a possible implementation method, the processing unit 1710 is configured to determine that a location of the terminal device is fixed or a moving track of the terminal device is fixed.

In a third embodiment, the communication apparatus is configured to perform operations of the mobility management network element. The processing unit 1710 is configured to determine satellite coverage information of a terminal device, where the satellite coverage information indicates a time period in which the terminal device is covered by a satellite network and/or indicates a time period in which the terminal device is not covered by the satellite network; and determine a maximum waiting time based on the satellite coverage information, where the maximum waiting time indicates maximum duration for waiting until the terminal device is reachable.

In a possible implementation method, the processing unit 1710 is configured to determine, based on the satellite coverage information, that the terminal device is unreachable.

In a possible implementation method, the processing unit 1710 is configured to receive the satellite coverage information by using the transceiver unit 1720.

In a possible implementation method, the processing unit 1710 is configured to receive, by using the transceiver unit 1720, ephemeris information of a satellite cell in which the terminal device is located, and determine the satellite coverage information based on the ephemeris information.

In a possible implementation method, the processing unit 1710 is configured to send a paging message to the access network device by using the transceiver unit 1720, where the paging message includes identification information of the terminal device, and the paging message indicates to page the terminal device; and receive a first message from the access network device by using the transceiver unit 1720, where the first message includes a paging failure indication and the satellite coverage information of the terminal device, and the paging failure indication indicates that a reason for a paging failure is that the terminal device is not covered by the satellite network. Optionally, the paging failure indication further indicates that a mobility management network element needs to perform reachability determining/paging based on the satellite coverage information.

In a possible implementation method, the processing unit 1710 is configured to determine that a location of the terminal device is fixed or a moving track of the terminal device is fixed.

In a fourth embodiment, the communication apparatus is configured to perform operations of the terminal device. The transceiver unit 1720 is configured to receive first information, where the first information indicates that the terminal device performs uplink transmission based on a satellite network coverage status when the terminal device has an uplink transmission requirement. The processing unit 1710 is configured to: when the terminal device has the uplink transmission requirement, determine, based on the first information, that the terminal device is not covered by a satellite network, and determine to skip performing uplink transmission.

In a possible implementation method, the first information is the satellite coverage information. The satellite coverage information indicates a time period in which the terminal device is covered by the satellite network and/or a time period in which the terminal device is not covered by the satellite network. The first information specifically indicates that the terminal device initiates uplink transmission based on the satellite coverage information when the terminal device has the uplink transmission requirement.

In a possible implementation method, the processing unit 1710 is configured to receive the satellite coverage information by using the transceiver unit 1720. The satellite coverage information indicates a time period in which the terminal device is covered by the satellite network and/or a time period in which the terminal device is not covered by the satellite network. The first information specifically indicates that the terminal device initiates uplink transmission based on the satellite coverage information when the terminal device has the uplink transmission requirement.

In a possible implementation method, the uplink transmission requirement includes one or more of periodic TAU, periodic registration, or uplink data transmission.

In a fifth embodiment, the communication apparatus is configured to perform operations of the terminal device. The transceiver unit 1720 is configured to receive sleep time information, where a sleep time period corresponding to the sleep time information includes a time period in which a terminal device is not covered by a satellite network, the sleep time information is determined based on satellite coverage information of the terminal device, and the satellite coverage information indicates a time period in which the terminal device is covered by the satellite network and/or the time period in which the terminal device is not covered by the satellite network. The processing unit 1710 is configured to perform sleep based on the sleep time information.

In a possible implementation method, the sleep time information includes a sleep start time, and the sleep start time is within an eDRX cycle of the terminal device, a periodic TAU cycle of the terminal device, or a periodic registration cycle of the terminal device.

In a possible implementation method, the sleep time information includes a sleep start time and a sleep end time; or the sleep time information includes a sleep start time and sleep duration.

In a sixth embodiment, the communication apparatus is configured to perform operations of the access network device. The processing unit 1710 is configured to obtain satellite coverage information or ephemeris information of a satellite cell, where the satellite coverage information indicates a time period in which the satellite cell is covered by a satellite network and/or a time period in which the satellite cell is not covered by the satellite network. The transceiver unit 1720 is configured to send the satellite coverage information or the ephemeris information of the satellite cell to a mobility management network element.

In a possible implementation method, the transceiver unit 1720 is configured to send, in an N2 interface setup procedure, satellite coverage information or ephemeris information corresponding to a satellite cell of the access network device to the mobility management network element.

In a possible implementation method, the transceiver unit 1720 is configured to send, in a registration procedure of a terminal device, satellite coverage information or ephemeris information of a satellite cell in which the terminal device is located to the mobility management network element.

In a possible implementation method, the transceiver unit 1720 is configured to receive a paging message from the mobility management network element, where the paging message includes identification information of the terminal device, and the paging message indicates to page the terminal device. The processing unit 1710 is configured to determine, based on the satellite coverage information of the satellite cell in which the terminal device is located, that the terminal device is unreachable, and send a first message to the mobility management network element by using the transceiver unit 1720, where the first message includes a paging failure indication and the satellite coverage information of the terminal device, and the paging failure indication indicates that a reason for this paging failure is that the terminal device is not covered by the satellite network. Optionally, the paging failure indication further indicates that the mobility management network element needs to perform reachability determining/paging based on the satellite coverage information.

In a seventh embodiment, the communication apparatus is configured to perform operations of the mobility management network element. The processing unit 1710 is configured to determine a periodic TAU cycle of a terminal device based on satellite coverage information of the terminal device, and the transceiver unit 1720 is configured to send the periodic TAU cycle to the terminal device. Alternatively, the processing unit 1710 is configured to determine a periodic registration cycle of a terminal device based on satellite coverage information of the terminal device, and the transceiver unit 1720 is configured to send the periodic registration cycle to the terminal device, where the satellite coverage information indicates a time period in which the terminal device is covered by a satellite network and/or indicates a time period in which the terminal device is not covered by the satellite network.

In a possible implementation method, the time period corresponding to the periodic TAU cycle includes the time period in which the terminal device is not covered by the satellite network; or the time period corresponding to the periodic registration cycle includes the time period in which the terminal device is not covered by the satellite network.

In a possible implementation method, the processing unit 1710 is further configured to send indication information to an access network device based on the satellite coverage information by using the transceiver unit 1720, where the indication information indicates the access network device to execute a procedure of releasing the terminal device.

In a possible implementation method, the processing unit 1710 is configured to determine first duration based on the satellite coverage information of the terminal device, where the first duration is duration after the terminal device enters an idle state and before the terminal device enters a sleep state. The transceiver unit 1720 is configured to send the first duration to the terminal device.

In a possible implementation method, the transceiver unit 1720 is further configured to send a cause value to the terminal device, where the cause value is discontinuous satellite coverage.

In a possible implementation method, the cause value further indicates that the terminal device skips performing uplink transmission during sleep.

In a possible implementation method, the transceiver unit 1720 is configured to send a GUTI reallocation command to the terminal device, where the GUTI reallocation command includes the periodic TAU cycle; or send a TAU accept message to the terminal device, where the TAU accept message includes the periodic TAU cycle.

In a possible implementation method, the transceiver unit 1720 is configured to send a configuration update command to the terminal device, where the configuration update command includes the periodic registration cycle; or send a mobility registration update accept message to the terminal device, where the mobility registration update accept message includes the periodic registration cycle.

In an eighth embodiment, the communication apparatus is configured to perform operations of the terminal device. The transceiver unit 1720 is configured to receive a periodic TAU cycle from a mobility management network element, and the processing unit 1710 is configured to perform periodic TAU based on the periodic TAU cycle, where a time period corresponding to the periodic TAU cycle includes a time period in which the terminal device is not covered by a satellite network. Alternatively, the transceiver unit 1720 is configured to receive a periodic registration cycle from a mobility management network element, and the processing unit 1710 is configured to perform periodic registration based on the periodic registration cycle, where a time period corresponding to the periodic registration cycle includes a time period in which the terminal device is not covered by a satellite network.

In a possible implementation method, the periodic TAU cycle or the periodic registration cycle is determined based on satellite coverage information of the terminal device, and the satellite coverage information indicates a time period in which the terminal device is covered by the satellite network and/or the time period in which the terminal device is not covered by the satellite network.

In a possible implementation method, the processing unit 1710 is configured to send, before the transceiver unit 1720 receives the periodic TAU cycle from the mobility management network element, a TAU request to the mobility management network element based on the satellite coverage information of the terminal device by using the transceiver unit 1720, or send, before the transceiver unit 1720 receives the periodic registration cycle from the mobility management network element, a mobility registration update request to the mobility management network element based on the satellite coverage information of the terminal device by using the transceiver unit 1720, where the satellite coverage information indicates the time period in which the terminal device is covered by the satellite network and/or the time period in which the terminal device is not covered by the satellite network.

In a possible implementation method, the transceiver unit 1720 is further configured to receive first duration from the mobility management network element, where the first duration is duration after the terminal device enters an idle state and before the terminal device enters a sleep state, and the first duration is determined based on the satellite coverage information of the terminal device.

In a possible implementation method, the transceiver unit 1720 is configured to receive a cause value from the mobility management network element, where the cause value is discontinuous satellite coverage.

In a possible implementation method, the cause value further indicates that the terminal device skips performing uplink transmission during sleep. When there is an uplink transmission requirement, it is determined, based on the cause value, to skip performing uplink transmission.

In a ninth embodiment, the communication apparatus is configured to perform operations of the access network device. The processing unit 1710 is configured to send a context release request to a mobility management network element based on satellite coverage information of a terminal device by using the transceiver unit 1720, where the context release request is used to request the mobility management network element to release a context of the terminal device, and the satellite coverage information indicates a time period in which the terminal device is covered by a satellite network and/or indicates a time period in which the terminal device is not covered by the satellite network. The transceiver unit 1720 is further configured to receive a periodic TAU cycle from the mobility management network element, and sending the periodic TAU cycle to the terminal device, where a time period corresponding to the periodic TAU cycle includes the time period in which the terminal device is not covered by the satellite network. Alternatively, the transceiver unit 1720 is further configured to receive a periodic registration cycle from the mobility management network element, and send the periodic registration cycle to the terminal device, where a time period corresponding to the periodic registration cycle includes the time period in which the terminal device is not covered by the satellite network.

For more detailed descriptions about the processing unit 1710 and the transceiver unit 1720, refer to related descriptions in the method embodiments directly. Details are not described herein again.

As shown in FIG. 18, the communication apparatus 1800 includes a processor 1810. Optionally, the communication apparatus 1800 may further include an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to store instructions executed by the processor 1810, or input data required by the processor 1810 to run the instructions, or data generated after the processor 1810 runs the instructions.

When the communication apparatus 1800 is configured to implement the foregoing method embodiment, the processor 1810 is configured to perform a function of the processing unit 1710, and the interface circuit 1820 is configured to perform a function of the transceiver unit 1720.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or the functions according to embodiments of this application are all or partially implemented. The computer may be a general-purpose computer, a dedicated computer, a computer network, a base station, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or may be a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk. The computer-readable storage medium may be a volatile or nonvolatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean an execution sequence, and the execution sequences of the processes should be determined based on functions and internal logic of the processes.

## Claims

1. A communication method, comprising:
determining sleep time information of a terminal device based on satellite coverage information of the terminal device, wherein the satellite coverage information indicates a time period in which the terminal device is covered by a satellite network and/or indicates a time period in which the terminal device is not covered by the satellite network, and a sleep time period corresponding to the sleep time information comprises the time period in which the terminal device is not covered by the satellite network; and
sending the sleep time information to the terminal device.

2. The method according to claim 1, wherein the method further comprises:
determining one or more of an extended discontinuous reception eDRX cycle, a periodic tracking area update TAU cycle, or a periodic registration cycle of the terminal device based on the satellite coverage information, wherein
the sleep time information comprises a sleep start time, and the sleep start time is within the eDRX cycle, the periodic TAU cycle, or the periodic registration cycle.

3. The method according to claim 1, wherein
the sleep time information comprises a sleep start time and a sleep end time; or
the sleep time information comprises a sleep start time and sleep duration.

4. The method according to any one of claims 1 to 3, wherein the method further comprises:
receiving the satellite coverage information; or
receiving ephemeris information of a satellite cell in which the terminal device is located, and determining the satellite coverage information based on the ephemeris information.

5. The method according to any one of claims 1 to 4, wherein the method further comprises:
when a deregistration timer corresponding to the terminal device expires, determining, based on the satellite coverage information, that the terminal device is not covered by the satellite network, and determining to skip performing deregistration on the terminal device.

6. A communication method, comprising:
when a deregistration timer corresponding to a terminal device expires, determining, based on satellite coverage information of the terminal device, that the terminal device is not covered by a satellite network, wherein the satellite coverage information indicates a time period in which the terminal device is covered by the satellite network and/or a time period in which the terminal device is not covered by the satellite network; and
in response to a case in which the terminal device is not covered by the satellite network, determining to skip performing deregistration on the terminal device.

7. The method according to claim 6, wherein the method further comprises:
sending first information to the terminal device, wherein the first information indicates that the terminal device performs uplink transmission based on a satellite network coverage status when the terminal device has an uplink transmission requirement.

8. The method according to claim 7, wherein the method further comprises:
sending the satellite coverage information to the terminal device, wherein
the first information specifically indicates that the terminal device initiates uplink transmission based on the satellite coverage information when the terminal device has the uplink transmission requirement.

9. The method according to any one of claims 6 to 8, wherein the method further comprises:
receiving the satellite coverage information; or
receiving ephemeris information of a satellite cell in which the terminal device is located, and determining the satellite coverage information based on the ephemeris information.

10. A communication method, comprising:
determining satellite coverage information of a terminal device, wherein the satellite coverage information indicates a time period in which the terminal device is covered by a satellite network and/or indicates a time period in which the terminal device is not covered by the satellite network; and
determining a maximum waiting time based on the satellite coverage information, wherein the maximum waiting time indicates maximum duration for waiting until the terminal device is reachable.

11. The method according to claim 10, wherein the method further comprises:
determining, based on the satellite coverage information, that the terminal device is unreachable.

12. The method according to claim 10 or 11, wherein the determining satellite coverage information of a terminal device comprises:
receiving the satellite coverage information.

13. The method according to claim 10 or 11, wherein the determining satellite coverage information of a terminal device comprises:
receiving ephemeris information of a satellite cell in which the terminal device is located; and
determining the satellite coverage information based on the ephemeris information.

14. A communication method, comprising:
receiving first information, wherein the first information indicates that a terminal device performs uplink transmission based on a satellite network coverage status when the terminal device has an uplink transmission requirement; and
when there is the uplink transmission requirement, determining, based on the first information, that the terminal device is not covered by a satellite network, and determining to skip performing uplink transmission.

15. The method according to claim 14, wherein the first information is satellite coverage information, and the satellite coverage information indicates a time period in which the terminal device is covered by the satellite network and/or a time period in which the terminal device is not covered by the satellite network; and
the first information specifically indicates that the terminal device initiates uplink transmission based on the satellite coverage information when the terminal device has the uplink transmission requirement.

16. The method according to claim 14, wherein the method further comprises:
receiving satellite coverage information, wherein the satellite coverage information indicates a time period in which the terminal device is covered by the satellite network and/or a time period in which the terminal device is not covered by the satellite network; and
the first information specifically indicates that the terminal device initiates uplink transmission based on the satellite coverage information when the terminal device has the uplink transmission requirement.

17. The method according to any one of claims 14 to 16, wherein the uplink transmission requirement comprises one or more of periodic TAU, periodic registration, or uplink data transmission.

18. A communication method, comprising:
receiving sleep time information, wherein a sleep time period corresponding to the sleep time information comprises a time period in which a terminal device is not covered by a satellite network, the sleep time information is determined based on satellite coverage information of the terminal device, and the satellite coverage information indicates a time period in which the terminal device is covered by the satellite network and/or the time period in which the terminal device is not covered by the satellite network; and
sleeping based on the sleep time information.

19. The method according to claim 18, wherein
the sleep time information comprises a sleep start time, and the sleep start time is within an eDRX cycle of the terminal device, a periodic TAU cycle of the terminal device, or a periodic registration cycle of the terminal device.

20. The method according to claim 18, wherein
the sleep time information comprises a sleep start time and a sleep end time; or
the sleep time information comprises a sleep start time and sleep duration.

21. A communication method, comprising:
determining a periodic tracking area update TAU cycle of a terminal device based on satellite coverage information of the terminal device, and sending the periodic TAU cycle to the terminal device; or
determining a periodic registration cycle of the terminal device based on satellite coverage information of the terminal device, and sending the periodic registration cycle to the terminal device, wherein
the satellite coverage information indicates a time period in which the terminal device is covered by a satellite network and/or indicates a time period in which the terminal device is not covered by the satellite network.

22. The method according to claim 21, wherein a time period corresponding to the periodic TAU cycle comprises the time period in which the terminal device is not covered by the satellite network; or
a time period corresponding to the periodic registration cycle comprises the time period in which the terminal device is not covered by the satellite network.

23. The method according to claim 21 or 22, wherein the method further comprises:
sending indication information to an access network device based on the satellite coverage information, wherein the indication information indicates the access network device to execute a procedure of releasing the terminal device.

24. The method according to any one of claims 21 to 23, wherein the method further comprises:
determining first duration based on the satellite coverage information of the terminal device, wherein the first duration is duration after the terminal device enters an idle state and before the terminal device enters a sleep state; and
sending the first duration to the terminal device.

25. The method according to any one of claims 21 to 24, wherein the method further comprises:
sending a cause value to the terminal device, wherein the cause value indicates that the terminal device skips performing uplink transmission during sleep.

26. A communication method, comprising:
receiving a periodic TAU cycle from a mobility management network element, and performing periodic TAU based on the periodic TAU cycle, wherein a time period corresponding to the periodic TAU cycle comprises a time period in which a terminal device is not covered by a satellite network; or
receiving a periodic registration cycle from a mobility management network element, and performing periodic registration based on the periodic registration cycle, wherein a time period corresponding to the periodic registration cycle comprises a time period in which a terminal device is not covered by a satellite network.

27. The method according to claim 26, wherein the periodic TAU cycle or the periodic registration cycle is determined based on satellite coverage information of the terminal device, and the satellite coverage information indicates a time period in which the terminal device is covered by the satellite network and/or the time period in which the terminal device is not covered by the satellite network.

28. The method according to claim 26 or 27, wherein before the receiving a periodic TAU cycle from a mobility management network element, the method further comprises:
sending a TAU request to the mobility management network element based on the satellite coverage information of the terminal device; or
before the receiving a periodic registration cycle from a mobility management network element, the method further comprises:
sending a mobility registration update request to the mobility management network element based on the satellite coverage information of the terminal device, wherein
the satellite coverage information indicates the time period in which the terminal device is covered by the satellite network and/or the time period in which the terminal device is not covered by the satellite network.

29. The method according to any one of claims 26 to 28, wherein the method further comprises:
receiving first duration from the mobility management network element, wherein the first duration is duration after the terminal device enters an idle state and before the terminal device enters a sleep state, and the first duration is determined based on the satellite coverage information of the terminal device.

30. The method according to any one of claims 26 to 29, wherein the method further comprises:
receiving a cause value from the mobility management network element, wherein the cause value is discontinuous satellite coverage.

31. The method according to claim 30, wherein the cause value further indicates that the terminal device skips performing uplink transmission during sleep; and
the method further comprises:
when there is an uplink transmission requirement, determining, based on the cause value, to skip performing uplink transmission.

32. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 13 and 21 to 25 or the method according to any one of claims 14 to 20 and 26 to 31 by using a logic circuit or by executing code instructions.

33. A computer-readable storage medium, wherein the storage medium stores a computer program or instructions, and when the computer program or the instructions is/are executed by a communication apparatus, the method according to any one of claims 1 to 31 is implemented.

34. A communication system, comprising:
a mobility management network element, configured to perform the method according to any one of claims 1 to 13; and
an access network device, configured to send satellite coverage information of a cell in which a terminal device is located to the mobility management network element.
